# EUROPÄISCHE PATENTANMELDUNG

(11) **EP 3 888 800 A1**
(43) Veröffentlichungstag der Anmeldung: **06.10.2021**
(21) Anmeldenummer: 21162889.6
(22) Anmeldetag: 16.03.2021
(51) Int. Cl.: B05B 17/06, B05B 9/08, B05B 12/08, B05B 15/63

(54) **MEDIENSPEICHERVORRICHTUNG, MEDIENAUFTRAGUNGSSYSTEM MIT EINER MEDIENSPEICHERVORRICHTUNG UND VERFAHREN ZU EINEM BEFÜLLEN EINER MEDIENSPEICHERVORRICHTUNG**

(30) Priorität: 30.03.2020 DE 102020204131; 17.09.2020 DE 102020211633
(71) Anmelder: Robert Bosch GmbH, 70442 Stuttgart (DE)
(72) Erfinder: Schmock, Stefan, 72135 Dettenhausen (DE); Amann, Sieghard, 71116 Gaertringen (DE); Fademrecht, Felix, 71106 Magstadt (DE); Jampolski, Leon, 71332 Waiblingen (DE); Sieber, Gustav, 88239 Wangen (DE); Doepner, Jan, 69120 Heidelberg (DE)

(57) **Zusammenfassung**

Die Erfindung geht aus von einer Medienspeichervorrichtung (14a) für ein Medienauftragungssystem (10a), mit zumindest einer Medienspeichereinheit (30a) zu einer Speicherung zumindest eines Mediums, mit zumindest einer, insbesondere mechanischen, Schnittstelle (32a) zu einer Verbindung mit einer Medienausgabeeinheit (12a) des Medienauftragungssystems (10a) und mit zumindest einer Medienübertragungseinheit (34a) zu einer Übertragung des Mediums von der Medienspeichereinheit (30a) auf die Medienausgabeeinheit (12a) in zumindest einem verbundenen Zustand der Schnittstelle (32a) mit der Medienausgabeeinheit (12a), wobei die Medienübertragungseinheit (34a) zumindest ein, insbesondere poröses, Medienübertragungselement (36a) aufweist, das an einem Ausgangskanal (38a) der Medienspeichereinheit (30a) angeordnet ist, wobei die Medienspeichereinheit (30a) zumindest ein flexibles Medienbegrenzungselement (40a) umfasst, das dazu vorgesehen ist, zumindest ein Speichervolumen (42a) der Medienspeichereinheit (30a) von einem Ausgleichsraum (44a) der Medienspeichereinheit (30a) abzugrenzen.

Es wird vorgeschlagen, dass die Schnittstelle (32a) dazu vorgesehen ist, das Medienübertragungselement (36a) in Abhängigkeit von einem Verbindungsparameter der Schnittstelle (32a) mit einem, insbesondere schwingungsangeregten, Medienausgabeelement (46a), insbesondere einer Membran, der Medienausgabeeinheit (12a) zu einer Übertragung des Mediums von der Medienspeichereinheit (30a) auf die Medienausgabeeinheit (12a) zu verbinden.

## Beschreibung

### Stand der Technik

Es ist bereits eine Medienspeichervorrichtung für ein Medienauftragungssystem, mit zumindest einer Medienspeichereinheit zu einer Speicherung zumindest eines Mediums, mit zumindest einer Schnittstelle zu einer Verbindung mit einer Medienausgabeeinheit des Medienauftragungssystems und mit zumindest einer Medienübertragungseinheit zu einer Übertragung des Mediums von der Medienspeichereinheit auf die Medienausgabeeinheit in zumindest einem verbundenen Zustand der Schnittstelle mit der Medienausgabeeinheit vorgeschlagen worden, wobei die Medienübertragungseinheit zumindest ein Medienübertragungselement aufweist, das an einem Ausgangskanal der Medienspeichereinheit angeordnet ist, wobei die Medienspeichereinheit zumindest ein flexibles Medienbegrenzungselement umfasst, das dazu vorgesehen ist, zumindest ein Speichervolumen der Medienspeichereinheit von einem Ausgleichsraum der Medienspeichereinheit abzugrenzen.

### Offenbarung der Erfindung

Die Erfindung geht aus von einer Medienspeichervorrichtung für ein Medienauftragungssystem, mit zumindest einer Medienspeichereinheit zu einer Speicherung zumindest eines Mediums, mit zumindest einer, insbesondere mechanischen, Schnittstelle zu einer Verbindung mit einer Medienausgabeeinheit des Medienauftragungssystems und mit zumindest einer Medienübertragungseinheit zu einer Übertragung des Mediums, insbesondere in eine Medienausgaberichtung der Medienübertragungseinheit, von der Medienspeichereinheit auf die Medienausgabeeinheit in zumindest einem verbundenen Zustand der Schnittstelle mit der Medienausgabeeinheit, wobei die Medienübertragungseinheit zumindest ein, insbesondere poröses, Medienübertragungselement aufweist, das an einem Ausgangskanal der Medienspeichereinheit angeordnet ist, wobei die Medienspeichereinheit zumindest ein flexibles Medienbegrenzungselement umfasst, das dazu vorgesehen ist, zumindest ein Speichervolumen der Medienspeichereinheit von einem Ausgleichsraum der Medienspeichereinheit abzugrenzen.

Es wird vorgeschlagen, dass die Schnittstelle dazu vorgesehen ist, das Medienübertragungselement in Abhängigkeit von einem Verbindungsparameter der Schnittstelle mit einem, insbesondere schwingungsangeregten, Medienausgabeelement, insbesondere einer Membran, der Medienausgabeeinheit zu einer Übertragung des Mediums von der Medienspeichereinheit auf die Medienausgabeeinheit zu verbinden.

Unter "vorgesehen" soll insbesondere speziell ausgelegt und/oder speziell ausgestattet verstanden werden. Darunter, dass ein Objekt, insbesondere das Medienbegrenzungselement, zu einer bestimmten Funktion, insbesondere das Speichervolumen von dem Ausgleichsraum abzugrenzen, vorgesehen ist, soll insbesondere verstanden werden, dass das Objekt diese bestimmte Funktion in zumindest einem Anwendungs- und/oder Betriebszustand erfüllt und/oder ausführt. Unter einem "Verbindungsparameter" soll insbesondere ein Parameter der Schnittstelle verstanden werden, welcher eine Eigenschaft der Schnittstelle hinsichtlich einer Verbindung mit der Medienausgabeeinheit und/oder einer Schnittstellenaufnahme des Medienauftragungssystems, einen Verbindungszustand der Schnittstelle und/oder einen Verlauf eines Verbindungsvorgangs der Schnittstelle mit der Medienausgabeeinheit und/oder der Schnittstellenaufnahme beschreibt. Beispielsweise ist der Verbindungsparameter als ein Abstand der Schnittstelle und der Schnittstellenaufnahme, als ein, an einer Verbindungsfläche der Schnittstelle und der Schnittstellenaufnahme und/oder der Medienausgabeeinheit vorherrschender Druck, als ein Angreifen eines Rastelements der Schnittstelle und/oder der Schnittstellenaufnahme zu einer Befestigung der Schnittstelle und der Schnittstellenaufnahme aneinander o. dgl. ausgebildet.

Besonders bevorzugt sind/ist die Medienspeichervorrichtung und/oder das Medienauftragungssystem zu einer Speicherung und/oder Ausgabe von dem Medium, insbesondere einer Farbe, vorgesehen. Vorzugsweise sind/ist die Medienspeichervorrichtung und/oder das Medienauftragungssystem nicht zu einer Verwendung in einem medizinischen Bereich vorgesehen und unterscheiden/unterscheidet sich bevorzugt von medizinischen Vorrichtungen und/oder Systemen. Bevorzugterweise sind/ist die Medienspeichervorrichtung und/oder das Medienauftragungssystem zu einer gezielten und/oder gerichteten Ausbringung des Mediums vorgesehen, beispielsweise zu einem Druck und/oder einer Darstellung von komplexen Objekten. Vorzugsweise ist das Medienauftragungssystem, insbesondere die Medienausgabeeinheit, nicht zu einem Zerstäuben des Mediums in der Umgebung vorgesehen. Insbesondere ist die Medienspeichervorrichtung als Teil des Medienauftragungssystems ausgebildet. Die Medienspeichervorrichtung, insbesondere die Medienspeichereinheit, ist bevorzugt als eine Wechselkapsel ausgebildet. Alternativ ist vorstellbar, dass die Medienspeichervorrichtung, insbesondere die Medienspeichereinheit, als eine Wechselpatrone, als ein Wechseltank, als eine Wechselkartusche oder als ein anderer, einem Fachmann als sinnvoll erscheinender Medienspeicher, insbesondere zu einem Speichern einer Farbe, ausgebildet ist.

Vorzugsweise ist die Schnittstelle dazu vorgesehen, insbesondere in einem mit der Medienausgabeeinheit und/oder der Schnittstellenaufnahme verbundenen Zustand, das Medienübertragungselement in einem vorgegebenen Abstand zu dem Medienausgabeelement anzuordnen und/oder, insbesondere direkt, an dem Medienausgabeelement anzuordnen. In einer besonders bevorzugten Ausgestaltung ist die Schnittstelle dazu vorgesehen, insbesondere in dem mit der Medienausgabeeinheit und/oder der Schnittstellenaufnahme verbundenen Zustand, das Medienübertragungselement direkt an dem Medienausgabeelement anzuordnen und/oder anzulegen. Vorzugsweise ist das Medienübertragungselement in dem mit der Medienausgabeeinheit und/oder der Schnittstellenaufnahme verbundenen Zustand in einer Übertragungsposition angeordnet, insbesondere zur Übertragung des Mediums von der Medienspeichereinheit auf die Medienausgabeeinheit und/oder von dem Medienübertragungselement auf das Medienausgabeelement. Insbesondere ist das Medienübertragungselement zumindest fluidtechnisch mit dem Medienbegrenzungselement, insbesondere dem Speichervolumen, verbunden. Bevorzugt begrenzt das Medienübertragungselement das Speichervolumen zumindest teilweise, insbesondere in einem Bereich des Ausgangskanals. Bevorzugterweise ist das Medienübertragungselement relativ zu der Schnittstelle, insbesondere einer Verbindungsfläche der Schnittstelle zu einem Anlegen an die Medienausgabeeinheit und/oder die Schnittstellenaufnahme, stationär angeordnet und/oder befestigt und/oder weist dauerhaft, insbesondere in jedem Betriebszustand, einen gleichbleibenden Abstand zur Schnittstelle auf. Bevorzugt ist das Medienübertragungselement zumindest teilweise, insbesondere zumindest größtenteils, innerhalb des Ausgangskanals angeordnet. Besonders bevorzugt ist der Ausgangskanal fluidtechnisch mit dem Speichervolumen verbunden. Vorzugsweise füllt das Medienübertragungselement den Ausgangskanal, insbesondere von dem Speichervolumen aus betrachtet, zumindest im Wesentlichen vollständig aus, wobei insbesondere das Medium ausschließlich über ein Durchströmen und/oder Durchfließen des, insbesondere porösen, Medienübertragungselements aus dem Speichervolumen durch den Ausgangskanal entnehmbar ist.

Vorzugsweise ist das Medienübertragungselement saugfähig ausgebildet, insbesondere dazu vorgesehen, zumindest einen Teil des Mediums aufzusaugen und aus dem Medienbegrenzungselement, insbesondere dem Speichervolumen, zu transportieren. Insbesondere ist das Medienübertragungselement dazu vorgesehen, das Medium mittels einer Kapillarwirkung, insbesondere nach einem Dochtprinzip, zu transportieren. Vorzugsweise fließt das Medium während einer Medienausgabe, insbesondere durch die Medienausgabeeinheit, aufgrund eines Konzentrationsunterschieds des Mediums zwischen einem in dem Speichervolumen angeordneten Endstück des Medienübertragungselements und einem außerhalb des Speichervolumens angeordneten, insbesondere mit der Medienausgabeeinheit und/oder dem Medienausgabeelement in Kontakt stehenden Endstück des Medienübertragungselements entlang des Medienübertragungselements, insbesondere aus dem Speichervolumen heraus. Insbesondere weist während einer Medienausgabe das außerhalb des Speichervolumens angeordnete, insbesondere mit der Medienausgabeeinheit, insbesondere dem Medienausgabeelement, in Kontakt stehende, Endstück des Medienübertragungselements eine geringere Konzentration des Mediums auf als das innerhalb des Speichervolumens angeordnete, insbesondere mit dem in dem Speichervolumen aufgenommenen Medium in Kontakt stehende, Endstück des Medienübertragungselements. Bevorzugt ist das Medienübertragungselement zumindest teilweise porös ausgebildet. Vorzugsweise ist das Medienübertragungselement schwammartig, insbesondere als ein Transportschwämmchen, ausgebildet. Alternativ ist denkbar, dass das Medienübertragungselement dochtartig, glasfaserartig, röhrchenartig o. dgl. ausgebildet ist und/oder aus einer Vielzahl von Kapillarfasern aufgebaut ist. Vorzugsweise weist das Medienübertragungselement eine zylinderartige, insbesondere kreiszylinderartige, Formgebung auf. Vorzugsweise liegt das Medienübertragungselement, insbesondere das außerhalb des Speichervolumens angeordnete Endstück des Medienübertragungselements, direkt an dem, zu einer Medienausgabe insbesondere oszillierenden und/oder schwingungsangeregten, Medienausgabeelement der Medienausgabeeinheit an. Insbesondere ist das Medienausgabeelement dazu vorgesehen, das auszugebende Medium von dem Medienübertragungselement aufzunehmen. Vorteilhaft kann eine Möglichkeit für eine kontrollierte und antriebsfreie Leitung des Mediums aus dem Speichervolumen ermöglicht werden. Es ist denkbar, dass das Medienübertragungselement zweiteilig ausgebildet ist. Die Medienspeichereinheit, insbesondere das Medienbegrenzungselement, ist insbesondere dazu vorgesehen, das Medium zur Speicherung innerhalb des Speichervolumens aufzunehmen.

Bevorzugt umgibt die Schnittstelle einen Ausgabebereich des Ausgangskanals zumindest größtenteils, insbesondere zumindest im Wesentlichen vollständig. Vorzugsweise ist das außerhalb des Speichervolumens angeordnete Endstück des Medienübertragungselements an dem Ausgabebereich des Ausgangskanals angeordnet. Es ist denkbar, dass ein den Ausgangskanal begrenzendes und/oder das Medienübertragungselement umschließendes Leitungselement als Teil der Schnittstelle ausgebildet ist, und insbesondere in zumindest einem Betriebszustand, insbesondere einem verbundenen Zustand der Schnittstelle, an der Medienausgabeeinheit und/oder der Schnittstellenaufnahme angelegt ist. Bevorzugt ist das Leitungselement, insbesondere der Ausgangskanal, rohrartig oder kanalartig ausgebildet, beispielsweise mit einer rechteckigen, quadratischen, runden und/oder kreisförmigen Querschnittsfläche. Vorzugsweise weist das Medienübertragungselement eine zumindest im Wesentlichen zylindrische oder kubische Grundform auf.

Unter einer "mechanischen Schnittstelle" soll insbesondere eine Schnittstelle verstanden werden, welche dazu vorgesehen ist, in zumindest einem Betriebszustand an ein anderes Objekt, insbesondere die Schnittstellenaufnahme und/oder die Medienausgabeeinheit, angelegt zu werden. Vorzugsweise umfasst die mechanische Schnittstelle zumindest ein Haltemittel, beispielsweise ein Rastelement o. dgl. zu einer form- und/oder kraftschlüssigen Verbindung mit dem anderen Objekt. Unter einer "form- und/oder kraftschlüssigen Verbindung" soll dabei insbesondere eine lösbare Verbindung verstanden werden, wobei eine Haltekraft zwischen zwei Bauteilen vorzugsweise durch einen geometrischen Eingriff der Bauteile ineinander, eine magnetische Kraft und/oder eine Reibkraft zwischen den Bauteilen übertragen wird. Besonders bevorzugt umfasst die Schnittstelle zumindest eine Verbindungsfläche, über die die Schnittstelle mit der Medienausgabeeinheit und/oder der Schnittstellenaufnahme verbunden und/oder an dieser angelegt ist. Insbesondere umfasst das Medienübertragungselement, insbesondere an dem außerhalb des Speichervolumens angeordneten Endstück des Medienübertragungselements, zumindest eine Ausgabefläche, die dazu vorgesehen ist, das Medium an die Medienausgabeeinheit, insbesondere das Medienausgabeelement, auszugeben. Insbesondere liegt die Ausgabefläche in zumindest einem verbundenen Zustand der Schnittstelle, insbesondere flächig, an der Medienausgabeeinheit, insbesondere das Medienausgabeelement, an. Bevorzugt sind die Verbindungsfläche der Schnittstelle und die Ausgabefläche des Medienübertragungselements stationär zueinander angeordnet sind und/oder weisen dauerhaft, insbesondere in jedem Betriebszustand, einen gleichbleibenden Abstand zueinander auf. Insbesondere ist das Medienübertragungselement dazu vorgesehen, das Medium aus dem Speichervolumen, insbesondere in die Medienausgaberichtung, an die Ausgabefläche, insbesondere die Medienausgabeeinheit und/oder das Medienausgabeelement, zu übertragen.

Vorzugsweise ist das flexible Medienbegrenzungselement dazu vorgesehen, das Speichervolumen in Abhängigkeit von einer Menge des Mediums innerhalb des Speichervolumens anzupassen, insbesondere zu expandieren oder zu komprimieren. Insbesondere umfasst die Medienspeichereinheit zumindest ein Rückstellelement, welches dazu vorgesehen ist, das flexible Medienbegrenzungselement mit einer Rückstellkraft zu beaufschlagen. Besonders bevorzugt wirkt das Rückstellelement, insbesondere die Rückstellkraft, der Kapillarwirkung des Medienübertragungselements, einem Kompressionsdruck des Mediums innerhalb des Speichervolumens und/oder einem Fluiddruck des Ausgleichsraums entgegen. Bevorzugt ist das Rückstellelement an dem flexiblen Medienbegrenzungselement angeordnet. Beispielsweise ist das Rückstellelement als eine Feder, insbesondere eine Druck- oder eine Zugfeder, ausgebildet. Beispielsweise ist das flexible Medienbegrenzungselement als eine Membran, als eine Folie, als eine Trennwand o. dgl. ausgebildet, die insbesondere das Speichervolumen zumindest teilweise begrenzt. Es ist auch denkbar, dass das flexible Medienbegrenzungselement das Speichervolumen, insbesondere mit Ausnahme des Ausgangskanals, zumindest größtenteils, insbesondere zumindest im Wesentlichen vollständig, begrenzt. Bevorzugt ist das flexible Medienbegrenzungselement zwischen dem Speichervolumen und dem Ausgleichsraum angeordnet. Insbesondere ist das flexible Medienbegrenzungselement dazu vorgesehen, das Speichervolumen zumindest fluidtechnisch von dem Ausgleichsraum zu trennen. Insbesondere durch das poröse Medienübertragungselement und das den Speicherraum begrenzende flexible Medienbegrenzungselement können Flüssigkeiten, wie beispielsweise Farbe, in loser Form im Speichervolumen gelagert werden, wodurch eine vorteilhaft kompakte Bauform der Medienspeichervorrichtung erreicht werden kann, insbesondere bei einer gleichbleibenden Menge des Mediums. Weiter kann eine Bildung von Lufträumen innerhalb des Speichervolumens vorteilhaft verhindert werden. Bevorzugt kann durch das Rückstellelement, das Medienbegrenzungselement und das Medienübertragungselement eine Medienausgabe aus dem Speichervolumen vorteilhaft unabhängig von einer Lage der Medienspeichervorrichtung, insbesondere des Ausgangskanals, ermöglicht werden.

Besonders bevorzugt ist das Medium als eine Farbe, ein Pigmentgemisch, eine Lösung von Pigmenten o. dgl. ausgebildet. Vorzugsweise ist die Medienspeichervorrichtung zu einer Verwendung mit einer Farbe, insbesondere zu einer Speicherung und/oder geregelten Abgabe einer Farbe, vorgesehen. Insbesondere ist die Medienspeichervorrichtung zu einer Verwendung eines Mediums vorgesehen, welches eine Viskositätsfunktion aufweist, die einem Wert zwischen 2 mPa·s und 40 mPa·s, vorzugsweise zwischen 10 mPa·s und 35 mPa·s und bevorzugt zwischen 15 mPa·s und 30 mPa·s, entspricht. Bevorzugt ist die Medienspeichervorrichtung zu einer Verwendung eines Mediums vorgesehen, welches bei einer Temperatur zwischen 5 bis 50°C eine dynamische Oberflächenspannung aufweist, die einem Wert zwischen 30 mN/m und 62 mN/m entspricht. Es ist auch denkbar, dass das Medium als ein von einer Farbe verschiedenes Fluid, wie beispielsweise einem Pflegemittel, einem Lack, einem Düngemittel, einem Pflanzenschutzmittel o. dgl., ausgebildet ist. Vorzugsweise ist das Medienauftragungssystem, insbesondere die Medienspeichereinheit, zu einer Verwendung mit einem als nicht-newtonschen Fluid ausgebildeten Medium vorgesehen. Besonders bevorzugt ist die Medienspeichervorrichtung und/oder das Medienauftragungssystem nicht zu einer medizinischen Anwendung vorgesehen und/oder verschieden von einer medizinischen Vorrichtung ausgebildet. Vorzugsweise ist die Medienspeichervorrichtung und/oder das Medienauftragungssystem zu einem Speichern und/oder einem Aufnehmen von flüssigen Medien, insbesondere Farbe, vorgesehen.

Durch die erfindungsgemäße Ausgestaltung der Medienspeichervorrichtung kann ein vorteilhaft einfacher und schneller Transport eines Mediums, insbesondere einer Farbe, von dem Speichervolumen zu dem Medienausgabeelement ermöglicht werden. Dadurch kann eine vorteilhaft zuverlässige Farbausgabe des Medienauftragungssystems erreicht werden. Es kann vorteilhaft ein Transport des Mediums, insbesondere der Farbe, durch Fluidkanäle entfallen, wobei insbesondere ein Verstopfen beziehungsweise eine Unterbrechung eines Medientransports zu dem Medienausgabeelement vorteilhaft verhindert werden kann. Es kann vorteilhaft eine anwendungsoptimierte Verwendung der Medienspeichervorrichtung mit einem schwingungsangeregten Medienausgabeelement zu einer Ausgabe des Mediums, insbesondere der Farbe, ermöglicht werden.

Des Weiteren wird vorgeschlagen, dass das Medienübertragungselement dazu vorgesehen ist, über eine Medienentnahme aus dem Speichervolumen einen Unterdruck im Speichervolumen zu erzeugen und das entnommene Medium an das Medienausgabeelement zu leiten. Es kann über das Medienübertragungselement eine vorteilhaft effiziente Entleerung des Speichervolumens ermöglicht werden. Es kann ein vorteilhaft passives Bewegen des flexiblen Medienbegrenzungselements zu einer Anpassung des Speichervolumens erfolgen. Dadurch kann eine Entstehung von Lufträumen innerhalb des Speichervolumens bei einer Entnahme des Mediums, insbesondere der Farbe, über das Medienübertragungselement vorteilhaft verhindert werden. Vorzugsweise ist das Medienübertragungselement dazu vorgesehen, den Unterdruck durch ein Zusammenwirken mit dem Rückstellelement zu erzeugt, wobei insbesondere das aus dem Speichervolumen über das Medienübertragungselement entnommene Medium im Speichervolumen einen Druck reduziert und das Rückstellelement einer druckbedingten Verkleinerung des Speichervolumens durch das Medienbegrenzungselement entgegenwirkt. Insbesondere wirkt der Unterdruck im Speichervolumen einem unkontrollierten Ausfließen des Mediums aus dem Speichervolumen über das Medienübertragungselement entgegen. Bevorzugt wirkt der Unterdruck der Rückstellkraft des Rückstellelements entgegen. Bevorzugt sind/ist das Rückstellelement und/oder das Medienübertragungselement derart ausgebildet, dass das Medium zumindest im Wesentlichen konstant aus dem Speichervolumen über das Medienübertragungselement abfließt, insbesondere über die Kapillarwirkung des Medienübertragungselements.

Zudem wird vorgeschlagen, dass die Medienspeichervorrichtung zumindest eine Sensoreinheit zu einem Bestimmen einer Füllstandskenngröße der Medienspeichereinheit an der Medienübertragungseinheit umfasst. Es kann eine vorteilhaft direkte und einfache Überwachung eines Füllstands der Medienspeichereinheit erreicht werden, insbesondere vorteilhaft unabhängig von einem mit der Medienspeichervorrichtung zu verbindenden Gerät. Es kann ein vorteilhaft hoher Benutzerkomfort ermöglicht werden. Unter einer "Füllstandskenngröße" soll insbesondere eine Kenngröße eines befüllbaren Körpers, insbesondere der Medienspeichereinheit, verstanden werden, welche einen Füllstand des Körpers beschreibt, eine Berechnung und/oder Bestimmung des Füllstands ermöglicht und/oder einem Benutzer ein Ablesen und/oder Abschätzen des Füllstands erleichtert und/oder ermöglicht. Beispielsweise ist die Füllstandskenngröße als eine Menge des im Speichervolumen angeordneten Mediums, als eine Menge eines im Ausgleichsraum angeordneten Fluids, insbesondere Luft, als eine Füllhöhe und/oder eine Größe des Medienbegrenzungselements o. dgl. ausgebildet. Vorzugsweise umfasst die Sensoreinheit zumindest ein Sensorelement, welches innerhalb oder an der Medienspeichereinheit, insbesondere dem Medienbegrenzungselement, und/oder der Medienübertragungseinheit angeordnet ist. Insbesondere ist die Sensoreinheit dazu vorgesehen, die Füllstandskenngröße unabhängig von einem Verbindungszustand der Medienspeichervorrichtung, insbesondere der Schnittstelle, zu bestimmen. Es ist aber auch denkbar, dass die Sensoreinheit dazu vorgesehen ist, die Füllstandskenngröße durch ein Zusammenwirken mit zumindest einer, insbesondere externen, Recheneinheit und/oder einem, insbesondere externen, Sensorelement des Medienauftragungssystems zu bestimmen, welches insbesondere getrennt und/oder beabstandet von der Medienspeichervorrichtung ausgebildet ist.

Ferner wird vorgeschlagen, dass die Sensoreinheit zumindest ein, insbesondere das vorher genannte, Sensorelement aufweist, das dazu vorgesehen ist, zum Bestimmen der Füllstandskenngröße zumindest eine Durchsatzkenngröße des Medienübertragungselements zu erfassen. Es kann vorteilhaft eine Überwachung eines Medientransports durch das Medienübertragungselement erreicht werden. Über das Sensorelement kann vorteilhaft eine Fehlfunktion der Medienspeichervorrichtung ermittelt werden, insbesondere da die Durchsatzkenngröße des Medienübertragungselements nicht ausschließlich von der Füllstandskenngröße abhängt. Es kann vorteilhaft einfach und schnell eine notwendige Wartung der Medienspeichervorrichtung, insbesondere ein Befüllen des Speichervolumens und/oder ein Austauschen des Medienübertragungselements, erkannt werden. Unter einer "Durchsatzkenngröße" soll insbesondere eine Kenngröße eines von einem Medium durchströmbaren und/oder durchfließbaren Körpers, insbesondere des Medienübertragungselements, verstanden werden, welche eine Menge des den Körper durchströmenden und/oder durchfließenden Mediums beschreibt, eine Berechnung und/oder Bestimmung der Menge des den Körper durchströmenden und/oder durchfließenden Mediums ermöglicht und/oder einem Benutzer ein Ablesen und/oder Abschätzen der Menge des den Körper durchströmenden und/oder durchfließenden Mediums erleichtert und/oder ermöglicht. Vorzugsweise ist das Sensorelement an dem Medienübertragungselement und/oder dem Leitungselement angeordnet. Bevorzugt begrenzt das Sensorelement den Ausgangskanal zumindest teilweise. Insbesondere liegt das Sensorelement an dem Medienübertragungselement an. Bevorzugt ist das Sensorelement als ein optischer, elektrischer und/oder bewegbarer Sensor ausgebildet.

Des Weiteren wird vorgeschlagen, dass die Durchsatzkenngröße als ein elektrischer Widerstand des Medienübertragungselements ausgebildet ist. Es kann eine vorteilhaft einfache und kostengünstige Ausgestaltung des Sensorelements ermöglicht werden. Es kann eine vorteilhaft kompakte Ausgestaltung der Medienspeichervorrichtung, insbesondere der Medienspeichereinheit, erreicht werden. Vorzugsweise umfasst die Sensoreinheit zumindest zwei Sensorelemente, die insbesondere an dem Medienübertragungselement angeordnet sind. Insbesondere ist der elektrische Widerstand des Medienübertragungselements abhängig von einer Menge des Mediums, welches innerhalb des Medienübertragungselements, insbesondere in einem Bereich zwischen den zwei Sensorelementen, angeordnet ist. Vorzugsweise ist das Medium als ein elektrisch leitfähiges Medium ausgebildet. Alternativ ist denkbar, dass das Medium hinsichtlich eines elektrischen Stroms durch das Medienübertragungselement isolierend ausgebildet ist, wobei insbesondere ein Wert der als elektrischer Widerstand ausgebildeten Durchsatzkenngröße bei einer steigenden Menge des Mediums innerhalb des Medienübertragungselements, insbesondere in einem Bereich zwischen den zwei Sensorelementen, verringert wird. Bevorzugt liegen die Sensorelemente an dem Medienübertragungselement, insbesondere einer Außenfläche des Medienübertragungselements, an. Insbesondere sind die Sensorelemente zumindest elektrisch leitend mit dem Medienübertragungselement verbunden. Beispielsweise sind die Sensorelemente als Leiterplatten ausgebildet, welche zumindest elektrisch miteinander verbunden sind. Vorzugsweise sind die Sensorelemente an dem Leitungselement angeordnet und begrenzen insbesondere den Ausgangskanal zumindest teilweise. Bevorzugt ist die Sensoreinheit dazu vorgesehen, zumindest ein elektrisches Signal, insbesondere einen elektrischen Strom und/oder eine elektrische Spannung, durch das Medienübertragungselement von einem Sensorelement zu einem anderen Sensorelement zu übertragen, wobei insbesondere der elektrische Widerstand des Medienübertragungselements erfasst wird. Bevorzugt ist die Sensoreinheit dazu vorgesehen, in Abhängigkeit des elektrischen Widerstands des Medienübertragungselements die Füllstandskenngröße der Medienspeichereinheit zu bestimmen. Insbesondere umfasst die Sensoreinheit zumindest eine Elektronikeinheit zu einer Bestimmung der Füllstandskenngröße in Abhängigkeit des elektrischen Widerstands des Medienübertragungselements. Unter einer "Elektronikeinheit" soll insbesondere eine Einheit mit einer Prozessoreinheit und mit einer Speichereinheit sowie mit einem in der Speichereinheit gespeicherten Betriebsprogramm verstanden werden. Bevorzugt ist die Sensoreinheit, insbesondere die Elektronikeinheit, dazu vorgesehen, beispielsweise mittels eines Vergleichs eines erfassten Werts des elektrischen Widerstands des Medienübertragungselements mit zumindest einem Referenzwert des elektrischen Widerstands des Medienübertragungselements, welcher zumindest einem Wert der Füllstandskenngröße zugeordnet ist, die Füllstandskenngröße zu bestimmen. Beispielsweise ist die Füllstandskenngröße als eine Menge des innerhalb des Medienübertragungselements gespeicherten Mediums ausgebildet, welches über das Medienübertragungselement dem Speichervolumen entnommen ist. Bevorzugt ermöglicht ein bestimmter Wert der Menge an innerhalb des Medienübertragungselements gespeicherten Mediums einen Rückschluss, insbesondere eine Berechnung und/oder Abschätzung, einer Menge des innerhalb des Speichervolumens verbleibenden Mediums und/oder zumindest eine Aussage, ob ein spezifischer Füllstand des Speichervolumens unterschritten wird.

Zudem wird vorgeschlagen, dass die Schnittstelle zumindest einen Fluidkanal umfasst, der fluidtechnisch getrennt von dem Speichervolumen ausgebildet ist und dazu vorgesehen ist, zu einem Befüllen des Speichervolumens einen Unterdruck an dem Ausgleichsraum bereitzustellen. Es kann ein vorteilhaft einfaches und schnelles Befüllen des Speichervolumens ermöglicht werden. Insbesondere durch die Anordnung des Fluidkanals an der Schnittstelle kann eine vorteilhaft hohe Kompatibilität der Medienspeichervorrichtung mit einer Befüllstation ermöglicht werden. Es kann eine Verschmutzung des Fluidkanals und/oder des Ausgleichsraums und/oder eine Druckveränderung innerhalb des Ausgleichsraums bei einem Betrieb der Medienspeichervorrichtung innerhalb des Medienauftragungssystems vorteilhaft verhindert werden. Insbesondere ist der Fluidkanal als ein von der Schnittstelle und/oder einem Grundkörper der Medienspeichervorrichtung, insbesondere der Medienspeichereinheit und/oder der Medienübertragungseinheit, begrenztes Volumen ausgebildet, welches insbesondere zu einer Leitung eines Fluids, insbesondere Luft, vorgesehen ist. Vorzugsweise ist der Fluidkanal fluidtechnisch mit dem Ausgleichsraum verbunden. Bevorzugt ist der Fluidkanal dazu vorgesehen, den Ausgleichsraum fluidtechnisch mit einer die Medienspeichervorrichtung umgebenden Umgebung zu verbinden. Insbesondere ist der Fluidkanal dazu vorgesehen, zum Befüllen des Speichervolumens über die Schnittstelle mit zumindest einer externen Kompressionseinheit verbunden zu werden. Vorzugsweise ist der Fluidkanal, insbesondere ein umgebungsseitiger Teil des Fluidkanals, in einem Nahbereich des Leitungselements und/oder des Medienübertragungselements angeordnet. Unter einem "Nahbereich" soll insbesondere ein Bereich eines Objekts, insbesondere des Leitungselements und/oder des Medienübertragungselements, verstanden werden, der sich innerhalb eines maximalen Abstands von höchstens 10 cm, vorzugsweise höchstens 5 cm und besonders bevorzugt höchstens 3 cm, um das Objekt erstreckt.

Ferner wird vorgeschlagen, dass die Medienübertragungseinheit, insbesondere das Medienübertragungselement, insbesondere zumindest im Wesentlichen zerstörungsfrei, wechselbar ausgebildet ist. Es kann eine vorteilhaft einfache und schnelle Wartung der Medienspeichervorrichtung erreicht werden. Es kann ein vorteilhaft schnelles und direktes Befüllen des Speichervolumens erreicht werden. Es kann eine vorteilhaft lange Betriebsdauer der Medienspeichervorrichtung ermöglicht werden, wobei insbesondere die Medienspeichervorrichtung als ein wiederverwendbares Bauteil ausgebildet ist. Unter "im Wesentlichen zerstörungsfrei" soll insbesondere verstanden werden, dass ein Körper, insbesondere die Medienübertragungseinheit und/oder das Medienübertragungselement, in einem Zustand oder einem Verfahrensschritt, insbesondere bei einem Auswechseln, frei von Beeinflussungen, Veränderungen und/oder Beschädigungen ist und/oder bleibt, welche eine Funktionalität des Körpers, insbesondere zumindest hinsichtlich einer Verwendung innerhalb des Medienauftragungssystems, beeinträchtigen. Insbesondere ist die Medienübertragungseinheit, insbesondere das Medienübertragungselement, zumindest im Wesentlichen zerstörungsfrei, abnehmbar. Vorzugsweise ist die Medienübertragungseinheit, insbesondere das Medienübertragungselement, dazu vorgesehen, bei einem Befüllen des Speichervolumens, bei einer Wartung, insbesondere einer Reinigung, der Medienspeichervorrichtung, insbesondere der Medienspeichereinheit, und/oder des Medienausgabeelements und/der bei einem Wechsel des Medienausgabeelements, insbesondere zu einem von dem Medienausgabeelement verschiedenen anderen Medienausgabeelement, welches beispielsweise eine andere Steifigkeit, Anregungsfrequenz o. dgl. aufweist, abgenommen und/oder gewechselt zu werden.

Des Weiteren wird vorgeschlagen, dass das Medienübertragungselement dazu vorgesehen ist, ein an das Medienausgabeelement zu übertragendes Medium zu filtern. Es kann vorteilhaft eine Verstopfung und/oder ein Absetzen von Rückständen in der Medienspeichervorrichtung und/oder dem Medienauftragungssystem vorteilhaft verhindert werden. Es kann eine vorteilhaft gleichmäßige Ausgabe des Mediums, insbesondere der Farbe, über das Medienausgabeelement erreicht werden. Dadurch kann mittels der Ausgabe des Mediums ein vorteilhaft sauberes und/oder auflösungsoptimiertes Endprodukt ermöglicht werden. Vorzugsweise ist das Medienübertragungselement dazu vorgesehen, das Medium von dem Speichervolumen zu der Medienausgabeeinheit, insbesondere dem Medienausgabeelement, mit einer zumindest im Wesentlichen gleichmäßigen Dichte zu transportieren, insbesondere hinsichtlich einer Verteilung des Mediums innerhalb des Medienübertragungselements. Besonders bevorzugt ist das Medienausgabeelement dazu vorgesehen, das zu übertragende Medium von Fremdkörpern, Schmutz und/oder Lufteinschlüssen zu filtern. Es ist denkbar, dass das Medienübertragungselement mehrteilig ausgebildet ist und/oder die Medienübertragungseinheit ein weiteres Medienübertragungselement zu einem Filtern des Mediums aufweist. Beispielsweise ist das Medienübertragungselement aus einer Filterschicht und einer Transportschicht ausgebildet, wobei insbesondere die Filterschicht zu einem Filtern des zu übertragenden Mediums vorgesehen ist und die Transportschicht zur Übertragung des Mediums vorgesehen ist. Insbesondere ist denkbar, dass die Schmutzschicht und/oder das weitere Medienübertragungselement derart ausgebildet sind/ist, dass Fremdkörper, Schmutzteilchen und/oder Lufteinschlüsse passiv oder aktiv von der Filterschicht und/oder dem weiteren Medienübertragungselement angezogen werden. Insbesondere sind die Filterschicht und die Transportschicht und/oder das Medienübertragungselement und das weitere Medienübertragungselement in Medienausgaberichtung zumindest teilweise nebeneinander und/oder hintereinander angeordnet. Beispielsweise sind die Filterschicht und die Transportschicht und/oder das Medienübertragungselement und das weitere Medienübertragungselement in Medienausgaberichtung in mehreren Schichten oder, insbesondere koaxial, ineinander angeordnet.

Es wird vorgeschlagen, dass das flexible Medienbegrenzungselement zumindest teilweise, insbesondere zumindest größtenteils, elastisch ausgebildet ist und dazu vorgesehen ist, insbesondere bei einer Entnahme von Medium aus dem Speichervolumen, eine Rückstellkraft zu erzeugen, die einen Unterdruck in dem Speichervolumen bewirkt. Es kann ein separates Rückstellelement zur Erzeugung des Unterdrucks vorteilhaft entfallen. Dadurch kann eine vorteilhaft geringe Anzahl von Bauteilen ermöglicht werden. Es können vorteilhaft geringe Herstellungskosten erreicht werden. Insbesondere ist das flexible Medienbegrenzungselement zumindest teilweise, insbesondere zumindest größtenteils, aus einem elastischen Material ausgebildet. Bevorzugt ist das flexible Medienbegrenzungselement zumindest im Wesentlichen vollständig elastisch, insbesondere aus einem elastischen Material ausgebildet. Bevorzugt ist das Medienbegrenzungselement aus einem elastischen Kunststoff, aus Gummi oder aus einem Metall, insbesondere einem Metallblech, ausgebildet. Insbesondere ist das Medienbegrenzungselement dazu vorgesehen, bei einer Entnahme von Medium aus dem Speichervolumen elastisch verformt zu werden, wobei insbesondere die Rückstellkraft bei einer elastischen Verformung erhöht wird. Bevorzugt ist das Medienbegrenzungselement dazu vorgesehen, bei einer Entnahme von Medium aus dem Speichervolumen, insbesondere aus einem Grundzustand des Medienbegrenzungselements heraus, in Richtung des Speichervolumens elastisch verformt zu werden, wobei insbesondere die Rückstellkraft erhöht wird. Vorzugsweise wirkt eine Entnahme von Medium aus dem Speichervolumen durch das Medienübertragungselement gegen den durch das elastische Medienbegrenzungselement erzeugten Unterdruck.

Zudem wird vorgeschlagen, dass das flexible Medienbegrenzungselement dazu vorgesehen ist, in einem maximalen Füllzustand der Medienspeichereinheit, insbesondere des Speichervolumens, die Rückstellkraft zu erzeugen. Es kann eine vorteilhaft einfache Entnahme des Mediums durch das Medienübertragungselement aus dem Speichervolumen ermöglicht werden, insbesondere auch in dem maximalen Füllzustand der Medienspeichereinheit, insbesondere des Speichervolumens. Es kann ein ungewollter Einschluss von Luft oder einem anderen Gas in dem Speichervolumen vorteilhaft verhindert werden. Insbesondere weist das Medienbegrenzungselement, insbesondere in einem unmontierten Zustand, einen unverformten Grundzustand auf, wobei das, insbesondere montierte, Medienbegrenzungselement in dem maximalen Füllzustand der Medienspeichereinheit, insbesondere des Speichervolumens, gegenüber dem unverformten Grundzustand elastisch verformt ausgebildet ist. Insbesondere ist das Medienbegrenzungselement dazu vorgesehen, bereits in dem maximalen Füllzustand der Medienspeichereinheit, insbesondere des Speichervolumens, über eine Rückstellkraft einen Unterdruck in dem Speichervolumen zu erzeugen. Unter einem "maximalen Füllzustand der Medienspeichereinheit, insbesondere des Speichervolumens" soll insbesondere ein Füllzustand verstanden werden, in dem das Speichervolumen eine zur Verwendung innerhalb der Medienspeichervorrichtung maximale Größe aufweist. Insbesondere ist in keinem anderen Betriebszustand der Medienspeichereinheit zur Verwendung innerhalb der Medienspeichervorrichtung mehr Medium innerhalb des Speichervolumens angeordnet wie in dem maximalen Füllzustand.

Des Weiteren wird vorgeschlagen, dass das flexible Medienbegrenzungselement das Speichervolumen zusammen mit zumindest einer Wandung der Medienspeichereinheit begrenzt, wobei das Medienbegrenzungselement über eine Verbindungsstelle derart an der Wandung befestigt ist, dass eine zumindest im Wesentlichen luftdichte Verbindung entsteht. Es kann vorteilhaft ein Verlauf einer Form des Speichervolumens während einer Entnahme von Medium aus dem Speichervolumen vorgegeben werden, insbesondere da über die Wandung einen Teil der Form vorgegeben werden kann. Es kann ein ungewollter Einschluss von Luft oder einem anderen Gas in dem Speichervolumen vorteilhaft verhindert werden. Vorzugsweise ist das Medienbegrenzungselement über die Verbindungsstelle fest mit der Wandung verbunden, insbesondere an der Wandung befestigt. Bevorzugt begrenzt die Wandung das Speichervolumen in mindestens drei, vorzugsweise mindestens vier, und bevorzugt mindestens fünf, verschiedene Richtungen betrachtet, welche jeweils rechtwinklig zueinander angeordnet sind. Vorzugsweise ist die Verbindungsstelle über eine geschlossene Auflagefläche mit dem Medienbegrenzungselement verbunden. Insbesondere erstreckt sich die Verbindungsstelle an dem Medienbegrenzungselement betrachtet entlang einer in sich geschlossenen Strecke, die beispielsweise rund, kreisrund, elliptisch, viereckig oder n-eckig ausgebildet ist. Bevorzugt begrenzt die Verbindungsstelle auf dem Medienbegrenzungselement betrachtet einen Teilbereich des Medienbegrenzungselements, der das Speichervolumen direkt begrenzt. Bevorzugt ist die Verbindungsstelle als eine stoffschlüssige Verbindung, als eine Klemmverbindung, insbesondere mit einer Dichtung, o.dgl. ausgebildet. Bevorzugt ist die Verbindungsstelle in einem an der Wandung und an dem Medienbegrenzungselement angeordneten Zustand zumindest im Wesentlichen vollständig in einer Ebene angeordnet.

Ferner wird vorgeschlagen, dass das flexible Medienbegrenzungselement das Speichervolumen zumindest größtenteils, insbesondere zumindest im Wesentlichen vollständig, zumindest im Wesentlichen luftdicht begrenzt. Es kann eine vorteilhaft hohe Flexibilität hinsichtlich einer Form des Speichervolumens erreicht werden. Es können/kann eine durchgehende Oberflächenbeschaffenheit und/oder gleiche Hafteigenschaften hinsichtlich des Mediums über eine zumindest im Wesentlichen vollständige das Speichervolumen begrenzende Oberfläche ermöglicht werden. Dadurch können ungewollte Rückstände des Mediums an das Speichervolumen begrenzenden Oberflächen vorteilhaft verhindert werden. Es kann eine vorteilhaft gleichmäßige Belastung des Medienbegrenzungselements ermöglicht werden. Es kann eine vorteilhaft hohe Flexibilität hinsichtlich einer Form der Medienspeichereinheit, insbesondere des Speichervolumens, erreicht werden, insbesondere da eine Form des das Speichervolumen zumindest größtenteils, insbesondere zumindest im Wesentlichen vollständig, begrenzenden Medienbegrenzungselements leichter an eine über ein Gehäuse der Medienspeichereinheit vorgegebene Form angepasst werden kann. Vorzugsweise ist das, insbesondere das Speichervolumen zumindest größtenteils, insbesondere zumindest im Wesentlichen vollständig, luftdicht begrenzende, Medienbegrenzungselement beutelförmig, ballonförmig und/oder sackförmig ausgebildet. Insbesondere umschließt das Medienbegrenzungselement das Speichervolumen zumindest größtenteils, insbesondere zumindest im Wesentlichen vollständig. Besonders bevorzugt ist das elastische Medienbegrenzungselement derart ausgebildet und/oder angeordnet, dass es bei einer Entnahme von Medium aus dem Speichervolumen zumindest im Wesentlichen gleichmäßig elastisch verformt wird. Unter "im Wesentlichen gleichmäßig elastisch verformt" soll insbesondere verstanden werden, dass mindestens 70 %, vorzugsweise mindestens 80 % und bevorzugt mindestens 90 %, eines elastischen Elements, insbesondere des Medienbegrenzungselements, bei einer elastischen Verformung belastet werden. Vorzugsweise begrenzt das Medienbegrenzungselement zumindest einen, insbesondere genau einen, Fluidausgang, welcher dazu vorgesehen ist, das Speichervolumen fluidtechnisch mit dem Medienübertragungselement zu verbinden. Bevorzugt ist der Fluidausgang, insbesondere an einer dem Medienübertragungselement zugewandten Seite des Fluidausgangs, zumindest teilweise von einer Wandung der Medienspeichereinheit begrenzt. Insbesondere ist das Medienbegrenzungselement zumindest in einem Bereich des Fluidausgangs an dem Medienübertragungselement, der Wandung oder einem Gehäuse der Medienspeichereinheit befestigt. Es ist denkbar, dass die Medienspeichereinheit zumindest ein Haltemittel umfasst, welches dazu vorgesehen ist, das, insbesondere das Speichervolumen zumindest größtenteils, insbesondere zumindest im Wesentlichen vollständig, luftdicht begrenzende, Medienbegrenzungselement an einer Position relativ zu dem Medienübertragungselement und/oder einer/der Wandung der Medienspeichereinheit zu halten. Beispielsweise ist das zumindest eine Haltemittel als eine stoffschlüssige Verbindung, wie beispielsweise eine Klebestelle o. dgl., als eine Klemmverbindung und/oder als eine rein formschlüssige Verbindung ausgebildet. Beispielsweise ist der Fluidausgang derart angeordnet, dass das Medienbegrenzungselement, insbesondere unabhängig von einem Füllzustand des Speichervolumens, zumindest teilweise an einer Wandung der Medienspeichereinheit angeordnet ist, insbesondere anliegt.

Außerdem geht die Erfindung von einem Verfahren zu einem Befüllen einer Medienspeichervorrichtung, insbesondere einer erfindungsgemäßen Medienspeichervorrichtung, aus. Es wird vorgeschlagen, dass in zumindest einem Verfahrensschritt mittels eines Fluidkanals einer Schnittstelle der Medienspeichervorrichtung ein Unterdruck an einem an einem zu befüllenden Medienbegrenzungselement der Medienspeichervorrichtung angeordneten Ausgleichsraum bereitgestellt wird, wobei über ein Medienübertragungselement der Medienübertragungseinheit zumindest ein Medium in das Medienbegrenzungselement, insbesondere das durch das Medienbegrenzungselement begrenzte Speichervolumen, geleitet wird.

Durch die erfindungsgemäße Ausgestaltung des Verfahrens kann ein vorteilhaft einfaches und schnelles Befüllen des Speichervolumens der Medienspeichervorrichtung ermöglicht werden. Es kann eine vorteilhaft lange Betriebsdauer der Medienspeichervorrichtung ermöglicht werden, wobei insbesondere die Medienspeichervorrichtung als ein wiederverwendbares Bauteil ausgebildet ist. Es kann vorteilhaft ein Befüllen des Speichervolumens über die Schnittstelle erreicht werden.

Zusätzlich wird ein Medienauftragungssystem mit zumindest einer Medienspeichervorrichtung, insbesondere einer erfindungsgemäßen Medienspeichervorrichtung, mit zumindest einer Medienausgabeeinheit, die zumindest ein, insbesondere schwingungsangeregtes, Medienausgabeelement, insbesondere eine Membran, zu einer Ausgabe eines Mediums aufweist, und mit zumindest einer Schnittstellenaufnahme zu einer Aufnahme einer Schnittstelle der Medienspeichervorrichtung vorgeschlagen.

Durch die erfindungsgemäße Ausgestaltung des Medienauftragungssystems kann ein vorteilhaft einfacher und schneller Transport eines Mediums, insbesondere einer Farbe, von dem Speichervolumen zu dem Medienausgabeelement ermöglicht werden. Dadurch kann eine vorteilhaft zuverlässige Farbausgabe des Medienauftragungssystems erreicht werden. Es kann vorteilhaft ein Transport des Mediums, insbesondere der Farbe, durch Fluidkanäle entfallen, wobei insbesondere ein Verstopfen beziehungsweise eine Unterbrechung eines Medientransports zu dem Medienausgabeelement vorteilhaft verhindert werden kann. Es kann vorteilhaft eine anwendungsoptimierte Verwendung der Medienspeichervorrichtung mit dem schwingungsangeregten Medienausgabeelement zu einer Ausgabe des Mediums, insbesondere der Farbe, ermöglicht werden. Es kann eine vorteilhaft effiziente und direkte Farbübertragung von dem Medienübertragungselement an das schwingungsangeregte Medienausgabeelement ermöglicht werden.

Die erfindungsgemäße Medienspeichervorrichtung, das erfindungsgemäße Verfahren und/oder das erfindungsgemäße Medienauftragungssystem sollen/soll hierbei nicht auf die oben beschriebene Anwendung und Ausführungsform beschränkt sein. Insbesondere können/kann die erfindungsgemäße Medienspeichervorrichtung, das erfindungsgemäße Verfahren und/oder das erfindungsgemäße Medienauftragungssystem zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Darstellung eines erfindungsgemäßen Medienauftragungssystems mit einer erfindungsgemäßen Medienspeichervorrichtung in einem Betriebszustand zu einer Ausgabe eines Mediums,
- Fig. 2: eine schematische Darstellung einer Medienausgabeeinheit des erfindungsgemäßen Medienauftragungssystems mit einem schwingungsangeregten Medienausgabeelement,
- Fig. 3: einen schematischen Querschnitt der erfindungsgemäßen Medienspeichervorrichtung,
- Fig. 4: eine schematische Darstellung der Medienübertragungseinheit der erfindungsgemäßen Medienspeichervorrichtung und der Medienausgabeeinheit des erfindungsgemäßen Medienauftragungssystems in einem verbundenen Zustand,
- Fig. 5: eine schematische Darstellung eines beispielhaften Ablaufs eines erfindungsgemäßen Verfahrens zu einem Befüllen der erfindungsgemäßen Medienspeichervorrichtung,
- Fig. 6: einen schematischen Querschnitt einer Medienübertragungseinheit einer alternativen Ausgestaltung einer erfindungsgemäßen Medienspeichervorrichtung,
- Fig. 7: eine schematische Explosionszeichnung der Medienübertragungseinheit der alternativen Ausgestaltung der erfindungsgemäßen Medienspeichervorrichtung,
- Fig. 8: eine schematische Darstellung einer Medienübertragungseinheit einer weiteren alternativen Ausgestaltung einer erfindungsgemäßen Medienspeichervorrichtung und einer Medienausgabeeinheit eines erfindungsgemäßen Medienauftragungssystems in einem verbundenen Zustand,
- Fig. 9: eine perspektivische Darstellung einer alternativen Ausgestaltung eines Stützelements einer Medienübertragungseinheit einer alternativen Ausgestaltung einer erfindungsgemäßen Medienspeichervorrichtung,
- Fig. 10: eine perspektivische Darstellung einer weiteren alternativen Ausgestaltung eines Stützelements einer Medienübertragungseinheit einer alternativen Ausgestaltung einer erfindungsgemäßen Medienspeichervorrichtung,
- Fig. 11: eine schematische Darstellung einer weiteren alternativen Ausgestaltung einer erfindungsgemäßen Medienspeichervorrichtung mit einem elastischen Medienbegrenzungselement und
- Fig. 12: eine schematische Darstellung einer anderen weiteren Ausgestaltung einer erfindungsgemäßen Medienspeichervorrichtung mit einem elastischen Medienbegrenzungselement, welches einzeln zumindest im Wesentlichen vollständig ein Speichervolumen begrenzt.

### Beschreibung der Ausführungsbeispiele

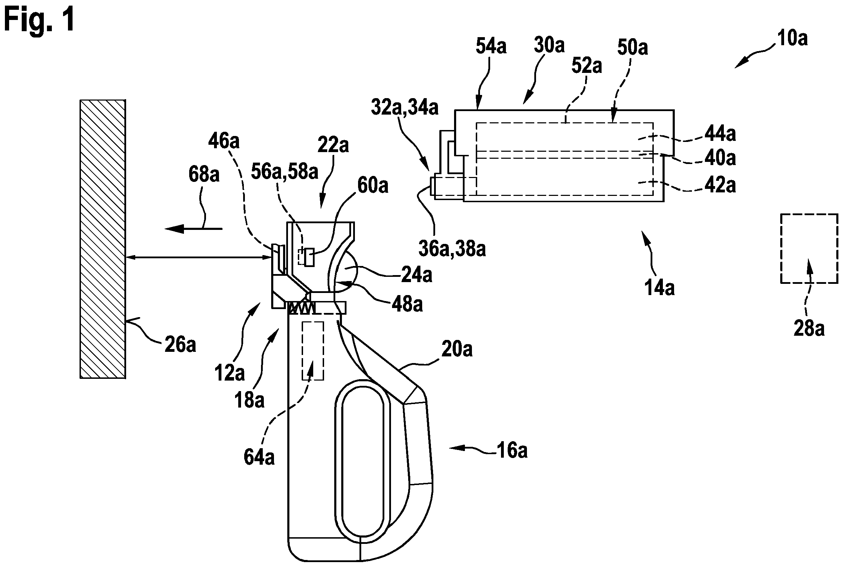

Figur 1 zeigt ein Medienauftragungssystem 10a, welches insbesondere als ein Farbauftragungssystem ausgebildet ist, in einer schematischen Darstellung. Das Medienauftragungssystem 10a umfasst eine Medienausgabeeinheit 12a zu einer Ausgabe von zumindest einem Medium und eine Medienspeichervorrichtung 14a. Das Medienauftragungssystem 10a umfasst eine Grundeinheit 16a, an der die Medienspeichervorrichtung 14a und die Medienausgabeeinheit 12a befestigbar sind. In Figur 1 ist die Medienausgabeeinheit 12a insbesondere in einem an der Grundeinheit 16a angeordneten Zustand und die Medienspeichervorrichtung 14a in einem von der Grundeinheit 16a und der Medienausgabeeinheit 12a getrennten Zustand gezeigt. Bevorzugt umfasst das Medienauftragungssystem 10a zumindest eine, insbesondere zumindest teilweise von der Medienspeichervorrichtung 14a und/oder von der Medienausgabeeinheit 12a getrennt ausgebildete, Fixiereinheit 18a, die dazu vorgesehen ist, die Medienspeichervorrichtung 14a und/oder die Medienausgabeeinheit 12a an der Grundeinheit 16a zu fixieren.

Die Grundeinheit 16a umfasst vorzugsweise zumindest ein Gehäuse 20a, an und/oder in dem eine Vielzahl von Komponenten des Medienauftragungssystems 10a angeordnet sind. Insbesondere bildet das Gehäuse 20a zumindest abschnittsweise einen Handgriff der Grundeinheit 16a aus. Vorzugsweise bildet das Gehäuse 20a zumindest abschnittsweise einen Aufnahmebereich 22a der Grundeinheit 16a aus, an dem die Medienspeichervorrichtung 14a und die Medienausgabeeinheit 12a befestigbar sind. Die Grundeinheit 16a umfasst bevorzugt zumindest ein, insbesondere an dem Gehäuse 20a in dem Aufnahmebereich 22a angeordnetes, Referenzelement 24a. Vorzugsweise sind/ist zumindest eine Position und/oder Ausrichtung des Medienauftragungssystems 10a relativ zu einer Oberfläche 26a, auf die ein Medienauftrag erfolgt, mittels des Referenzelements 24a erfassbar, insbesondere durch eine externe Einheit 28a, wie beispielsweise ein Smartphone, ein Tablet, eine Kamera, eine Augmented-Reality-Brille o. dgl. Das Referenzelement 24a ist vorzugsweise als ein Leuchtelement, insbesondere als eine LED-beleuchtete Lichtsphäre, ausgebildet. Alternativ ist denkbar, dass das Referenzelement 24a als ein strahlungsfreies Referenzelement, beispielhaft als ein QR-Code, als ein Strichcode oder als ein anderes, einem Fachmann als sinnvoll erscheinendes Referenzelement ausgebildet ist.

Die Medienspeichervorrichtung 14a umfasst eine Medienspeichereinheit 30a zu einer Speicherung des Mediums, eine mechanische Schnittstelle 32a zu einer Verbindung mit der Medienausgabeeinheit 12a und/oder der Grundeinheit 16a. Die Medienspeichervorrichtung 14a umfasst eine Medienübertragungseinheit 34a zu einer Übertragung des Mediums von der Medienspeichereinheit 30a auf die Medienausgabeeinheit 12a in zumindest einem verbundenen Zustand der Schnittstelle 32a mit der Medienausgabeeinheit 12a. Die Medienübertragungseinheit 34a umfasst zumindest ein poröses Medienübertragungselement 36a, das an einem Ausgangskanal 38a der Medienspeichereinheit 30a angeordnet ist, wobei die Medienspeichereinheit 30a zumindest ein flexibles Medienbegrenzungselement 40a umfasst, das dazu vorgesehen ist, zumindest ein Speichervolumen 42a der Medienspeichereinheit 30a von einem Ausgleichsraum 44a der Medienspeichereinheit 30a abzugrenzen. Die Schnittstelle 32a ist dazu vorgesehen, das Medienübertragungselement 36a in Abhängigkeit von einem Verbindungsparameter der Schnittstelle 32a mit einem, insbesondere schwingungsangeregten, Medienausgabeelement 46a der Medienausgabeeinheit 12a zu einer Übertragung des Mediums von der Medienspeichereinheit 30a auf die Medienausgabeeinheit 12a zu verbinden.

Die Medienausgabeeinheit 12a ist vorzugsweise als eine Oszillationsausgabeeinheit ausgebildet. Insbesondere ist die Medienausgabeeinheit 12a dazu vorgesehen, das von der Medienspeichervorrichtung 14a aufgenommene Medium mittels Oszillationen, insbesondere in einem Ultraschallfrequenzbereich, auszugeben, insbesondere in eine Medienausgaberichtung 68a auf die Oberfläche 26a. Alternativ ist denkbar, dass die Medienausgabeeinheit 12a als eine Ventildüseneinheit, als eine Pneumatikausgabeeinheit oder als eine andere, einem Fachmann als sinnvoll erscheinende Ausgabeeinheit ausgebildet ist. Insbesondere ist die Medienausgabeeinheit 12a dazu vorgesehen, Medienpunkte auf der Oberfläche 26a zu erzeugen. Vorzugsweise ist die Medienausgabeeinheit 12a, insbesondere zu einer Erzeugung von Medienpunkten auf der Oberfläche 26a, dazu vorgesehen, insbesondere in zumindest einem Druckbetriebsmodus, das Medium tröpfchenweise, insbesondere druckerartig, auszugeben. Vorzugsweise kann die Medienausgabeeinheit 12a zumindest einen Sprühbetriebsmodus aufweisen, in dem die Medienausgabeeinheit 12a zu einer kontinuierlichen, insbesondere sprühenden, Ausgabe des Mediums vorgesehen ist. Insbesondere ist die Medienausgabeeinheit 12a lösbar an der Grundeinheit 16a, insbesondere an dem Gehäuse 20a der Grundeinheit 16a, befestigbar. Insbesondere ist die Medienausgabeeinheit 12a gegen eine weitere Medienausgabeeinheit 12a, die insbesondere von der Medienausgabeeinheit 12a verschiedene Medienausgabeeigenschaften aufweisen kann, austauschbar an der Grundeinheit 16a, insbesondere an dem Gehäuse 20a der Grundeinheit 16a befestigbar.

Das Medienauftragungssystem 10a umfasst eine Schnittstellenaufnahme 48a zu einer Aufnahme der Schnittstelle 32a der Medienspeichervorrichtung 14a bei einer Befestigung der Medienspeichervorrichtung 14a an der Grundeinheit 16a und/oder der Medienausgabeeinheit 12a. Vorzugsweise sind die Schnittstelle 32a und die Schnittstellenaufnahme 48a zumindest teilweise als Teil der Fixiereinheit 18a ausgebildet, wobei insbesondere die Schnittstelle 32a und die Schnittstellenaufnahme 48a zu einer Fixierung aneinander vorgesehen und/oder ausgebildet sind. Vorzugsweise ist die Medienspeichervorrichtung 14a dazu vorgesehen, über die Schnittstellenaufnahme 48a mit der Grundeinheit 16a und/oder der Medienausgabeeinheit 12a verbunden zu werden. Es ist denkbar, dass die Medienspeichervorrichtung 14a dazu vorgesehen ist, mit der Medienausgabeeinheit 12a verbunden zu werden und darauffolgend zusammen mit der Medienausgabeeinheit 12a mit der Grundeinheit 16a verbunden zu werden. Alternativ ist denkbar, dass die Medienspeichereinheit 14a dazu vorgesehen ist, mit der Grundeinheit 16a und der Medienausgabeeinheit 12a zumindest im Wesentlichen gleichzeitig, insbesondere in einem miteinander verbundenen Zustand der Grundeinheit 16a und der Medienausgabeeinheit 12a, verbunden zu werden.

Das Medienspeichereinheit 30a umfasst zumindest einen Medienbehälter 50a, welcher zumindest teilweise von zumindest einer Innenwand 52a einer Gehäuseeinheit 54a der Medienspeichervorrichtung 14a begrenzt ist. Der Medienbehälter 50a und das Medienbegrenzungselement 40a begrenzen das Speichervolumen 42a. Die Medienspeichereinheit 30a, insbesondere der Medienbehälter 50a und das Medienbegrenzungselement 42a, ist zu einer Aufnahme von dem zumindest einen Medium, insbesondere von dem zumindest einen Farbmedium, vorgesehen. Insbesondere ist die Medienspeichervorrichtung 14a mit weiteren Komponenten des Medienauftragungssystems 10a koppelbar, insbesondere wirkverbindbar. Die Medienspeichervorrichtung 14a, insbesondere die Medienspeichereinheit 30a, ist bevorzugt als eine Wechselkapsel ausgebildet. Alternativ ist vorstellbar, dass die Medienspeichervorrichtung 14a, insbesondere die Medienspeichereinheit 30a, als eine Wechselpatrone, als ein Wechseltank, als eine Wechselkartusche oder als ein anderer, einem Fachmann als sinnvoll erscheinender Medienspeicher, insbesondere zu einem Speichern einer Farbe, ausgebildet ist. Insbesondere ist die Medienspeichervorrichtung 14a über die Schnittstelle 32a lösbar an der Grundeinheit 16a des Medienauftragungssystems 10a, insbesondere an dem Gehäuse 20a der Grundeinheit 16a, befestigbar. Insbesondere ist die Medienspeichervorrichtung 14a gegen eine weitere Medienspeichervorrichtung 14a, die insbesondere ein weiteres Medium enthält, austauschbar an der Grundeinheit 16a, insbesondere an dem Gehäuse 20a der Grundeinheit 16a, befestigbar. Das Medium ist vorzugsweise zumindest teilweise als ein flüssiges Medium ausgebildet. Insbesondere kann das Medium zu einem Sprühauftrag und/oder zu einem Druckauftrag vorgesehen sein. Bevorzugt ist das Medium als ein Farbmedium ausgebildet, beispielsweise als eine Farbstofftinte, als eine Pigmenttinte, als ein Sprühlack, als eine Dispersionsfarbe, als eine Acrylfarbe, als ein, insbesondere wasserbasierter, Acryllack o. dgl. Alternativ ist vorstellbar, dass das Medium als eine Sprühkreide, eine Sprühfolie oder als ein anderes, einem Fachmann als sinnvoll erscheinendes Medium ausgebildet ist. Insbesondere ist das Medienauftragungssystem 10a, insbesondere die Medienspeichervorrichtung 14a, zu einer Verwendung eines Mediums vorgesehen, welches eine Viskositätsfunktion aufweist, die einem Wert zwischen 2 mPa·s und 40 mPa·s, vorzugsweise zwischen 10 mPa·s und 35 mPa·s und bevorzugt zwischen 15 mPa·s und 30 mPa·s, entspricht. Bevorzugt ist das Medienauftragungssystem 10a, insbesondere die Medienspeichervorrichtung 14a, zu einer Verwendung eines Mediums vorgesehen, welches bei einer Temperatur zwischen 5 bis 50°C eine dynamische Oberflächenspannung aufweist, die einem Wert zwischen 30 mN/m und 62 mN/m entspricht.

Die Fixiereinheit 18a umfasst vorzugsweise zumindest ein an der Grundeinheit 16a angeordnetes und/oder von der Grundeinheit 16a ausgebildetes Fixierelement 56a, das dazu vorgesehen ist, die Medienspeichervorrichtung 14a und/oder die Medienausgabeeinheit 12a an der Grundeinheit 16a, insbesondere an dem Aufnahmebereich 22a, zu fixieren. Vorzugsweise umfasst die Fixiereinheit 18a zumindest ein weiteres, an der Medienspeichervorrichtung 14a und/oder an der Medienausgabeeinheit 12a angeordnetes und/oder von der Medienspeichervorrichtung 14a und/oder von der Medienausgabeeinheit 12a ausgebildetes Fixierelement 58a, das dazu vorgesehen ist, die Medienspeichervorrichtung 14a und/oder die Medienausgabeeinheit 12a an der Grundeinheit 16a, insbesondere an dem Aufnahmebereich 22a, zu fixieren, insbesondere mit dem Fixierelement 56a zusammenzuwirken. Die Fixiereinheit 18a ist vorzugsweise dazu vorgesehen, die Medienspeichervorrichtung 14a und die Medienausgabeeinheit 12a gemeinsam, insbesondere in Wechselwirkung miteinander, an der Grundeinheit 16a zu fixieren. Insbesondere ist denkbar, dass die Medienspeichervorrichtung 14a und die Medienausgabeeinheit 12a sich zumindest teilweise gegenseitig aneinander und/oder an der Grundeinheit 16a fixieren. Alternativ ist vorstellbar, dass die Fixiereinheit 18a dazu vorgesehen ist, die Medienspeichervorrichtung 14a und die Medienausgabeeinheit 12a zumindest teilweise entkoppelt voneinander, insbesondere unabhängig voneinander, an der Grundeinheit 16a zu fixieren. Es sind aber auch andere Ausgestaltungen der Fixiereinheit 18a denkbar. Insbesondere kann die Fixiereinheit 18a zumindest ein Fixierelement aufweisen, das zu einer Fixierung der Medienspeichervorrichtung 14a an der Grundeinheit 16a vorgesehen ist und zumindest ein weiteres Fixierelement aufweisen, das zu einer Fixierung der Medienausgabeeinheit 12a an der Grundeinheit 16a vorgesehen ist. Beispielsweise umfasst die Fixiereinheit 18a zumindest ein, insbesondere an der Grundeinheit 16a gelagertes, Betätigungselement 60a, wie beispielsweise einen Druckknopf, einen Schwenkhebel, einen Schiebeschalter o. dgl., das zu einer Lösung einer Fixierung, insbesondere einer Verriegelung, der Medienspeichervorrichtung 14a und/oder der Medienausgabeeinheit 12a an der Grundeinheit 16a und/oder aneinander betätigbar ist. Insbesondere sind die Medienspeichervorrichtung 14a, die Medienausgabeeinheit 12a und die Grundeinheit 16a in Figur 1 in einem voneinander entkoppelten Zustand dargestellt. Insbesondere ist die Medienausgabeeinheit 12a an der Grundeinheit 16a angeordnet, aber in einer von einer Fixierposition verschiedenen Position. Bevorzugt sind/ist die Medienspeichervorrichtung 14a und/oder die Medienausgabeeinheit 12a zu einer form- und/oder kraftschlüssigen wechselwirkenden Fixierung, insbesondere mittels einer Rastverbindung, mittels einer Schnappverbindung, mittels einer Klemmverbindung o. dgl., aneinander und/oder an der Grundeinheit 16a vorgesehen. Alternativ oder zusätzlich ist denkbar, dass die Medienspeichervorrichtung 14a und/oder die Medienausgabeeinheit 12a zu einer wechselwirkenden Fixierung mittels einer Magnetverbindung, mittels einer Saugverbindung, mittels einer Klettverbindung o. dgl., aneinander und/oder an der Grundeinheit 16a vorgesehen sind/ist.

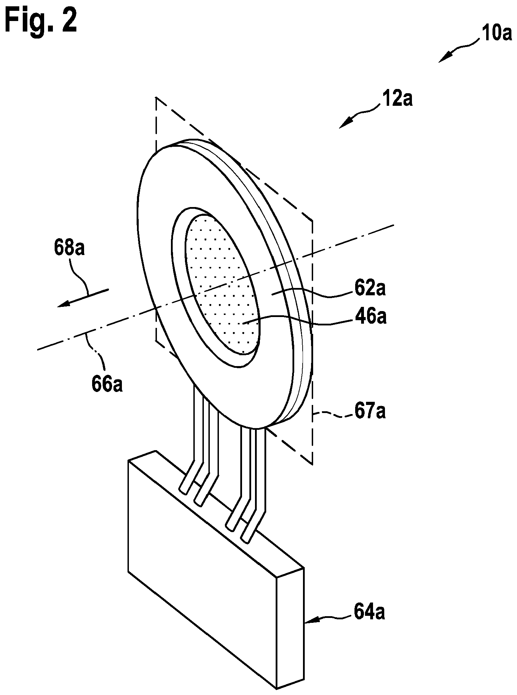

In Figur 2 ist die Medienausgabeeinheit 12a gezeigt. Die Medienausgabeeinheit 12a umfasst das Medienausgabeelement 46a, ein Aktuatorelement 62a zu einem Anregen des Medienausgabeelements 46a und eine Steuer- und/oder Regeleinheit 64a zu einer Steuerung und/oder Regelung des Aktuatorelements 62a zu einem Anregen des Medienausgabeelements 46a. Die Steuer- und/oder Regeleinheit 64a ist vorzugsweise dazu vorgesehen, zumindest einen Ansteuerungsparameter des Aktuatorelements 62a zu einem Anregen des Medienausgabeelements 46a, insbesondere dynamisch, einzustellen. Beispielsweise umfasst die Steuer- und/oder Regeleinheit 64a zumindest einen programmierbaren FPGA o. dgl.

Das Medienausgabeelement 46a ist zumindest teilelastisch, insbesondere elastisch verformbar, ausgebildet, insbesondere zu Schwingungen anregbar. Bevorzugt weist das Medienausgabeelement 46a eine Mehrzahl von Mediendurchtrittsöffnungen auf, durch die das Medium ausbringbar ist und die insbesondere in der Figur 2 lediglich angedeutet dargestellt sind. Die Mediendurchtrittsöffnungen sind insbesondere als eine Perforation bzw. Lochung des Medienausgabeelements 46a ausgebildet. Das Medienausgabeelement 46a ist insbesondere als eine Ultraschallmembran, als eine Ultraschallplatte o. dgl. ausgebildet. Das Medienausgabeelement 46a ist in einer Haupterstreckungsebene des Medienausgabeelements 46a, die insbesondere einer Membranebene 67a der Medienausgabeeinheit 12a entspricht, betrachtet bevorzugt kreisflächenförmig ausgebildet. Alternativ ist denkbar, dass das Medienausgabeelement 46a in der Haupterstreckungsebene des Medienausgabeelements 46a betrachtet ellipsenflächenförmig, polygonal, beispielsweise quadratflächenförmig oder dreiecksflächenförmig, o. dgl. ausgebildet ist. Bevorzugt ist das Medienausgabeelement 46a dazu vorgesehen, das Medium von dem Medienübertragungselement 36a aufzunehmen und in Richtung der Oberfläche 26a, insbesondere gerichtet, auszugeben (siehe Figur 1).

Vorzugsweise ist das Aktuatorelement 62a als ein Piezoelement, insbesondere als ein Piezokristall, ausgebildet. Insbesondere ändert das als Piezoelement ausgebildete Aktuatorelement 62a in Folge eines Anlegens einer elektrischen Spannung an das als Piezoelement ausgebildete Aktuatorelement 62a seine Form, was insbesondere durch eine mechanische Kopplung des als Piezoelement ausgebildeten Aktuatorelements 62a mit dem Medienausgabeelement 46a zu einer Schwingung des Medienausgabeelements 46a führt. Alternativ ist vorstellbar, dass das Aktuatorelement 62a als ein MEMS-Aktor (Mikroelektromechanisches-System-Aktor), als ein Ultraschallkonverter oder als ein anderes, einem Fachmann als sinnvoll erscheinendes Aktuatorelement 62a ausgebildet ist. Insbesondere ist das Aktuatorelement 62a kreisringförmig ausgebildet und koaxial um eine Mittelachse 66a des Medienausgabeelements 46a an dem Medienausgabeelement 46a angeordnet. Das Aktuatorelement 62a ist bevorzugt zumindest elektrisch mit der Steuer- und/oder Regeleinheit 64a verbunden.

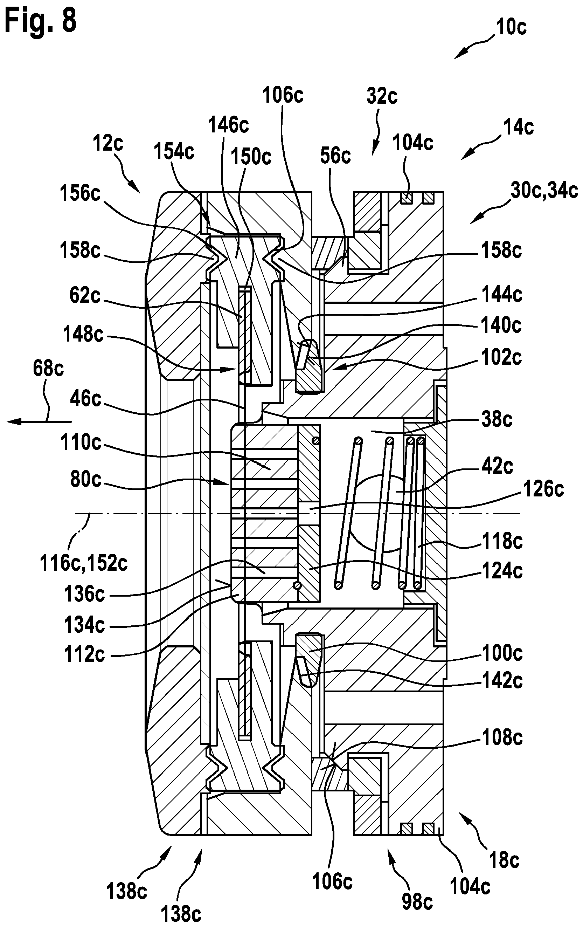

Zusätzlich ist denkbar, dass die Medienausgabeeinheit 12a zumindest eine Aufhängung umfasst (siehe Figur 8), die dazu vorgesehen ist, einer Dämpfung einer Bewegung des Medienausgabeelements 46a, insbesondere zu einer Ausgabe des Mediums, über einen Kontakt mit der Medienspeichervorrichtung 14a, insbesondere dem Medienübertragungselement 36a, entgegenzuwirken und/oder die Dämpfung zu minimieren.

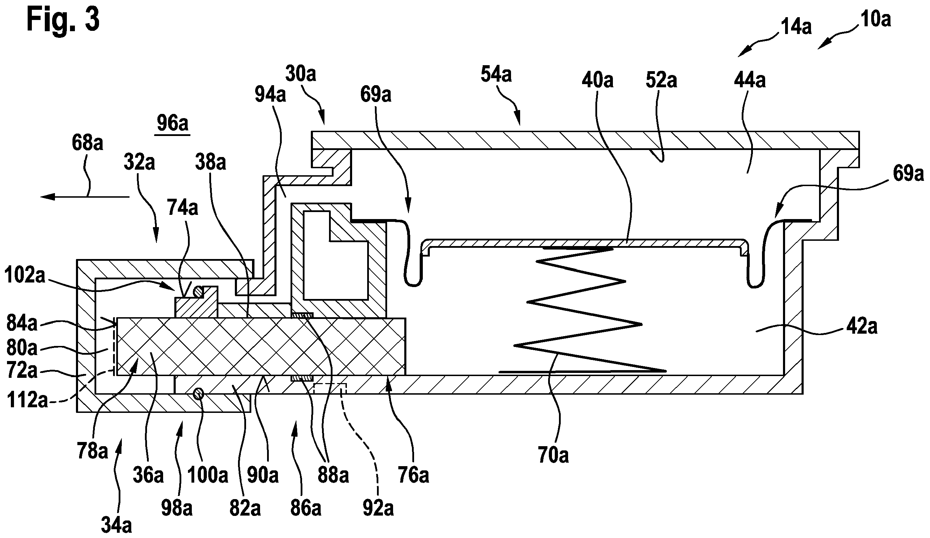

In Figur 3 ist ein schematischer Querschnitt der Medienspeichervorrichtung 14a gezeigt, insbesondere entlang einer Längsachse des Medienübertragungselements 36a und/oder der Medienausgaberichtung 68a. Die Gehäuseeinheit 54a der Medienspeichervorrichtung 14a begrenzt den Ausgleichsraum 44a und das Speichervolumen 42a über Innenwände 52a der Gehäuseeinheit 54a. Der Ausgleichsraum 44a und das Speichervolumen 42a sind über das Medienbegrenzungselement 40a zumindest fluidtechnisch voneinander getrennt ausgebildet. Das Medienbegrenzungselement 40a ist über flexible Bereiche 69a mit den Innenwänden 52a verbunden. Das Medienbegrenzungselement 40a ist dazu vorgesehen, das Speichervolumen 42a an eine Menge des innerhalb des Speichervolumens 42a angeordneten Mediums anzupassen. Insbesondere umfasst die Medienspeichereinheit 30a zumindest ein Rückstellelement 70a, welches dazu vorgesehen ist, das Medienbegrenzungselement 40a mit einer Rückstellkraft zu beaufschlagen. Besonders bevorzugt wirkt das Rückstellelement 70a, insbesondere die Rückstellkraft, der Kapillarwirkung des Medienübertragungselements 36a, einem Kompressionsdruck des Mediums innerhalb des Speichervolumens 42a und/oder einem Fluiddruck des Ausgleichsraums 44a entgegen. Bevorzugt ist das Rückstellelement 70a an dem Medienbegrenzungselement 40a angeordnet. Das Rückstellelement 70a ist als eine Feder, insbesondere eine Druckfeder, ausgebildet. Das Medienbegrenzungselement 40a ist als eine Trennwand ausgebildet, die über die flexiblen Bereiche 69a innerhalb des Medienbehälters 50a bewegbar ist. Alternativ ist denkbar, dass das Medienbegrenzungselement 40a als eine Membran, als eine Folie o. dgl. ausgebildet ist, die insbesondere das Speichervolumen 42a zumindest teilweise begrenzt. Es ist auch denkbar, dass das Medienbegrenzungselement 40a das Speichervolumen 42a, insbesondere mit Ausnahme des Ausgangskanals 38a, zumindest größtenteils, insbesondere zumindest im Wesentlichen vollständig, begrenzt. Bevorzugt ist das Medienbegrenzungselement 40a zwischen dem Speichervolumen 42a und dem Ausgleichsraum 44a angeordnet.

Vorzugsweise ist die Schnittstelle 32a dazu vorgesehen, insbesondere in einem mit der Medienausgabeeinheit 12a und/oder der Schnittstellenaufnahme 48a verbundenen Zustand, das Medienübertragungselement 36a in einem vorgegebenen Abstand zu dem Medienausgabeelement 46a anzuordnen und/oder, insbesondere direkt, an dem Medienausgabeelement 46a anzuordnen (siehe Figur 1). Insbesondere umfasst die Medienspeichervorrichtung 14a zumindest eine, insbesondere abnehmbare, Abdeckkappe 72a zu einem Abdecken der Schnittstelle 32a, insbesondere des Medienübertragungselements 36a. Vorzugsweise ist das Medienübertragungselement 36a in dem mit der Medienausgabeeinheit 12a und/oder der Schnittstellenaufnahme 48a verbundenen Zustand in einer Übertragungsposition angeordnet, insbesondere zur Übertragung des Mediums von der Medienspeichereinheit 30a auf die Medienausgabeeinheit 12a und/oder von dem Medienübertragungselement 36a auf das Medienausgabeelement 46a. Insbesondere ist das Medienübertragungselement 36a zumindest fluidtechnisch mit dem Medienbegrenzungselement 40a, insbesondere dem Speichervolumen 42a, verbunden. Bevorzugt begrenzt das Medienübertragungselement 36a das Speichervolumen 42a zumindest teilweise, insbesondere in einem Bereich des Ausgangskanals 38a. Bevorzugterweise ist das Medienübertragungselement 36a relativ zu der Schnittstelle 32a, insbesondere einer Verbindungsfläche 74a der Schnittstelle 32a zu einem Anlegen an die Medienausgabeeinheit 12a und/oder die Schnittstellenaufnahme 48a, stationär angeordnet und/oder befestigt und/oder weist dauerhaft, insbesondere in jedem Betriebszustand, einen gleichbleibenden Abstand zur Schnittstelle 32a auf. Bevorzugt ist das Medienübertragungselement 36a zumindest teilweise, insbesondere zumindest größtenteils, innerhalb des Ausgangskanals 38a angeordnet. Besonders bevorzugt ist der Ausgangskanal 38a fluidtechnisch mit dem Speichervolumen 42a verbunden. Vorzugsweise füllt das Medienübertragungselement 36a den Ausgangskanal 38a, insbesondere von dem Speichervolumen 42a aus betrachtet, zumindest im Wesentlichen vollständig aus, wobei insbesondere das Medium ausschließlich über ein Durchströmen und/oder Durchfließen des, insbesondere porösen, Medienübertragungselements 36a aus dem Speichervolumen 42a durch den Ausgangskanal 38a entnehmbar ist.

Vorzugsweise ist das Medienübertragungselement 36a saugfähig ausgebildet, insbesondere dazu vorgesehen, zumindest einen Teil des Mediums aufzusaugen und aus dem Medienbegrenzungselement 40a, insbesondere dem Speichervolumen 42a, zu transportieren. Insbesondere ist das Medienübertragungselement 36a dazu vorgesehen, das Medium mittels einer Kapillarwirkung, insbesondere nach einem Dochtprinzip, zu transportieren. Vorzugsweise fließt das Medium während einer Medienausgabe, insbesondere durch die Medienausgabeeinheit 12a, aufgrund eines Konzentrationsunterschieds des Mediums zwischen einem in dem Speichervolumen 42a angeordneten Endstück 76a des Medienübertragungselements 36a und einem außerhalb des Speichervolumens 42a angeordneten, insbesondere mit der Medienausgabeeinheit 12a und/oder dem Medienausgabeelement 46a in Kontakt stehenden/zu bringenden Endstück 78a des Medienübertragungselements 36a entlang des Medienübertragungselements 36a, insbesondere aus dem Speichervolumen 42a heraus. Insbesondere weist während einer Medienausgabe das außerhalb des Speichervolumens 42a angeordnete, insbesondere mit der Medienausgabeeinheit 12a, insbesondere dem Medienausgabeelement 46a, in Kontakt stehende, Endstück 78a des Medienübertragungselements 36a eine geringere Konzentration des Mediums auf als das innerhalb des Speichervolumens 42a angeordnete, insbesondere mit dem in dem Speichervolumen 42a aufgenommenen Medium in Kontakt stehende, Endstück 76a des Medienübertragungselements 36a. Bevorzugt ist das Medienübertragungselement 36a zumindest teilweise porös ausgebildet. Vorzugsweise ist das Medienübertragungselement 36a schwammartig, insbesondere als ein Transportschwämmchen, ausgebildet. Alternativ ist denkbar, dass das Medienübertragungselement 36a dochtartig, glasfaserartig, röhrchenartig o. dgl. ausgebildet ist und/oder aus einer Vielzahl von Kapillarfasern aufgebaut ist. Vorzugsweise weist das Medienübertragungselement 36a eine zylinderartige, insbesondere kreiszylinderartige, Formgebung auf. Vorzugsweise liegt das Medienübertragungselement 36a, insbesondere das außerhalb des Speichervolumens angeordnete Endstück 78a des Medienübertragungselements 36a, direkt an dem, zu einer Medienausgabe insbesondere oszillierenden und/oder schwingungsangeregten, Medienausgabeelement 46a der Medienausgabeeinheit 12a an. Insbesondere ist das Medienausgabeelement 46a dazu vorgesehen, das auszugebende Medium von dem Medienübertragungselement 36a aufzunehmen. Vorteilhaft kann eine Möglichkeit für eine kontrollierte und antriebsfreie Leitung des Mediums aus dem Speichervolumen 42a ermöglicht werden. Es ist denkbar, dass das Medienübertragungselement 36a zweiteilig ausgebildet ist. Die Medienspeichereinheit 30a, insbesondere das Medienbegrenzungselement 40a, ist insbesondere dazu vorgesehen, das Medium zur Speicherung innerhalb des Speichervolumens 42a aufzunehmen.

Bevorzugt umgibt die Schnittstelle 32a einen Ausgabebereich 80a des Ausgangskanals 38a zumindest größtenteils, insbesondere zumindest im Wesentlichen vollständig. Vorzugsweise ist das außerhalb des Speichervolumens 42a angeordnete Endstück 78a des Medienübertragungselements 36a an dem Ausgabebereich 80a des Ausgangskanals 38a angeordnet. Es ist denkbar, dass ein den Ausgangskanal 38a begrenzendes und/oder das Medienübertragungselement 36a umschließendes Leitungselement 82a als Teil der Schnittstelle 32a ausgebildet ist, und insbesondere in zumindest einem Betriebszustand, insbesondere einem verbundenen Zustand der Schnittstelle 32a, an der Medienausgabeeinheit 12a und/oder der Schnittstellenaufnahme 48a angelegt ist. Insbesondere ist das Leitungselement 82a einstückig mit der Gehäuseeinheit 54a ausgebildet. Bevorzugt ist das Leitungselement 82a, insbesondere der Ausgangskanal 38a, rohrartig oder kanalartig ausgebildet, beispielsweise mit einer rechteckigen, quadratischen, runden und/oder kreisförmigen Querschnittsfläche. Vorzugsweise weist das Medienübertragungselement 36a eine zumindest im Wesentlichen zylindrische oder kubische Grundform auf.

Das Medienübertragungselement 36a ist dazu vorgesehen, über eine Medienentnahme aus dem Speichervolumen 42a einen Unterdruck im Speichervolumen 42a zu erzeugen und das entnommene Medium an das Medienausgabeelement 46a zu leiten. Das Medienübertragungselement 36a umfasst, insbesondere an einem außerhalb des Speichervolumens 42a angeordneten Endstück 78a des Medienübertragungselements 36a, zumindest eine Ausgabefläche 84a, die dazu vorgesehen ist, das Medium an die Medienausgabeeinheit 12a, insbesondere das Medienausgabeelement 46a, auszugeben. Insbesondere liegt die Ausgabefläche 84a in zumindest einem verbundenen Zustand der Schnittstelle 32a, insbesondere flächig, an der Medienausgabeeinheit 12a, insbesondere das Medienausgabeelement 46a, an. Bevorzugt sind die Verbindungsfläche 74a der Schnittstelle 32a und die Ausgabefläche 84a des Medienübertragungselements 36a stationär zueinander angeordnet und/oder weisen dauerhaft, insbesondere in jedem Betriebszustand, einen gleichbleibenden Abstand zueinander auf. Insbesondere ist das Medienübertragungselement 36a dazu vorgesehen, das Medium aus dem Speichervolumen 42a, insbesondere in die Medienausgaberichtung 68a, an die Ausgabefläche 84a, insbesondere die Medienausgabeeinheit 12a und/oder das Medienausgabeelement 46a, zu übertragen. Vorzugsweise ist das Medienübertragungselement 36a dazu vorgesehen, den Unterdruck durch ein Zusammenwirken mit dem Rückstellelement 70a zu erzeugt, wobei insbesondere das aus dem Speichervolumen 42a über das Medienübertragungselement 36a entnommene Medium im Speichervolumen 42a einen Druck reduziert und das Rückstellelement 70a einer druckbedingten Verkleinerung des Speichervolumens 42a durch das Medienbegrenzungselement 40a entgegenwirkt. Insbesondere wirkt der Unterdruck im Speichervolumen 42a einem unkontrollierten Ausfließen des Mediums aus dem Speichervolumen 42a über das Medienübertragungselement 36a entgegen. Vorzugsweise wirkt der Unterdruck der Rückstellkraft des Rückstellelements 70a entgegen. Bevorzugt sind/ist das Rückstellelement 70a und/oder das Medienübertragungselement 36a derart ausgebildet, dass das Medium zumindest im Wesentlichen konstant aus dem Speichervolumen 42a über das Medienübertragungselement 36a abfließt, insbesondere über die Kapillarwirkung des Medienübertragungselements 36a.

Die Medienübertragungseinheit 34a, insbesondere das Medienübertragungselement 36a, ist, insbesondere zumindest im Wesentlichen zerstörungsfrei, wechselbar ausgebildet. Insbesondere ist die Medienübertragungseinheit 34a, insbesondere das Medienübertragungselement 36a, zumindest im Wesentlichen zerstörungsfrei, abnehmbar. Vorzugsweise ist die Medienübertragungseinheit 34a, insbesondere das Medienübertragungselement 36a, dazu vorgesehen, bei einem Befüllen des Speichervolumens 42a, bei einer Wartung, insbesondere einer Reinigung, der Medienspeichervorrichtung 14a, insbesondere der Medienspeichereinheit 30a und/der bei einem Wechsel des Medienausgabeelements 46a, insbesondere zu einem von dem Medienausgabeelement 46a verschiedenen anderen Medienausgabeelement 46a, welches beispielsweise eine andere Steifigkeit, Anregungsfrequenz o. dgl. aufweist, abgenommen und/oder gewechselt zu werden.

Das Medienübertragungselement 36a ist dazu vorgesehen, ein an das Medienausgabeelement 46a zu übertragendes Medium zu filtern. Vorzugsweise ist das Medienübertragungselement 36a dazu vorgesehen, das Medium von dem Speichervolumen 42a zu der Medienausgabeeinheit 12a, insbesondere dem Medienausgabeelement 46a, mit einer zumindest im Wesentlichen gleichmäßigen Dichte zu transportieren, insbesondere hinsichtlich einer Verteilung des Mediums innerhalb des Medienübertragungselements 36a. Besonders bevorzugt ist das Medienausgabeelement 46a dazu vorgesehen, das zu übertragende Medium von Fremdkörpern, Schmutz und/oder Lufteinschlüssen zu filtern. Es ist denkbar, dass das Medienübertragungselement 36a mehrteilig ausgebildet ist und/oder die Medienübertragungseinheit 34a ein weiteres Medienübertragungselement 36a zu einem Filtern des Mediums aufweist. Beispielsweise ist das Medienübertragungselement 36a aus einer Filterschicht und einer Transportschicht ausgebildet, welche insbesondere in den Figuren nicht gezeigt sind, wobei insbesondere die Filterschicht zu einem Filtern des zu übertragenden Mediums vorgesehen ist und die Transportschicht zur Übertragung des Mediums vorgesehen ist. Es sind aber auch andere Ausgestaltungen der Medienübertragungseinheit 34a, insbesondere des Medienübertragungselements 36a, denkbar.

Die Medienspeichervorrichtung 14a umfasst eine Sensoreinheit 86a zu einem Bestimmen einer Füllstandskenngröße der Medienspeichereinheit 30a an der Medienübertragungseinheit 34a. Insbesondere ist die Sensoreinheit 86a dazu vorgesehen, die Füllstandskenngröße unabhängig von einem Verbindungszustand der Medienspeichervorrichtung 14a, insbesondere der Schnittstelle 32a, zu bestimmen. Es ist aber auch denkbar, dass die Sensoreinheit 86a dazu vorgesehen ist, die Füllstandskenngröße durch ein Zusammenwirken mit zumindest einer, insbesondere externen, Recheneinheit und/oder einem, insbesondere externen, Sensorelement des Medienauftragungssystems 10a zu bestimmen, welches insbesondere getrennt und/oder beabstandet von der Medienspeichervorrichtung 14a ausgebildet ist. Die Sensoreinheit 86a weist zwei Sensorelemente 88a auf, die dazu vorgesehen sind, zum Bestimmen der Füllstandskenngröße zumindest eine Durchsatzkenngröße des Medienübertragungselements 36a zu erfassen. Vorzugsweise sind die Sensorelemente 88a jeweils an dem Medienübertragungselement 36a und/oder dem Leitungselement 82a angeordnet. Bevorzugt begrenzen die Sensorelemente 88a jeweils den Ausgangskanal 38a zumindest teilweise. Insbesondere liegen die Sensorelemente 88a an dem Medienübertragungselement 36a an. Bevorzugt sind die Sensorelemente 88a als optische, elektrische und/oder bewegbare Sensoren ausgebildet. Die Durchsatzkenngröße ist als ein elektrischer Widerstand des Medienübertragungselements 36a ausgebildet. Bevorzugt liegen die Sensorelemente 88a an einer Außenfläche 90a des Medienübertragungselements 36a an. Insbesondere sind die Sensorelemente 88a zumindest elektrisch leitend mit dem Medienübertragungselement 36a verbunden. Beispielsweise sind die Sensorelemente 88a als Leiterplatten ausgebildet, welche zumindest elektrisch miteinander verbunden sind. Vorzugsweise sind die Sensorelemente 88a an dem Leitungselement 82a angeordnet und begrenzen insbesondere den Ausgangskanal 38a zumindest teilweise. Bevorzugt ist die Sensoreinheit 86a dazu vorgesehen, zumindest ein elektrisches Signal, insbesondere einen elektrischen Strom und/oder eine elektrische Spannung, durch das Medienübertragungselement 36a von einem Sensorelement 88a zu einem anderen Sensorelement 88a zu übertragen, wobei insbesondere der elektrische Widerstand des Medienübertragungselements 36a erfasst wird. Bevorzugt ist die Sensoreinheit 86a dazu vorgesehen, in Abhängigkeit des elektrischen Widerstands des Medienübertragungselements 36a die Füllstandskenngröße der Medienspeichereinheit 30a zu bestimmen. Insbesondere umfasst die Sensoreinheit 86a zumindest eine Elektronikeinheit 92a zu einer Bestimmung der Füllstandskenngröße in Abhängigkeit des elektrischen Widerstands des Medienübertragungselements 36a. Bevorzugt ist die Sensoreinheit 86a, insbesondere die Elektronikeinheit 92a, dazu vorgesehen, beispielsweise mittels eines Vergleichs eines erfassten Werts des elektrischen Widerstands des Medienübertragungselements 36a mit zumindest einem Referenzwert des elektrischen Widerstands des Medienübertragungselements 36a, welcher zumindest einem Wert der Füllstandskenngröße zugeordnet ist, die Füllstandskenngröße zu bestimmen. Beispielsweise ist die Füllstandskenngröße als eine Menge an innerhalb des Medienübertragungselements 36a gespeicherten Mediums ausgebildet, welches über das Medienübertragungselement 36a dem Speichervolumen 42a entnommen ist. Bevorzugt ermöglicht ein bestimmter Wert der Menge des innerhalb des Medienübertragungselements 36a gespeicherten Mediums einen Rückschluss, insbesondere eine Berechnung und/oder Abschätzung, einer Menge an innerhalb des Speichervolumens 42a verbleibenden Mediums und/oder zumindest eine Aussage, ob ein spezifischer Füllstand des Speichervolumens 42a unterschritten wird. Es sind aber auch andere Ausgestaltungen der Sensoreinheit 86a, insbesondere der Sensorelemente 88a denkbar, beispielsweise mit einer von Zwei abweichenden Anzahl an Sensorelementen 88a. Es ist auch denkbar, dass die Durchsatzkenngröße und/oder die Füllstandskenngröße verschieden von einem elektrischen Widerstand des Medienübertragungselements 36a ausgebildet ist, beispielsweise als eine Kapazität, als eine Induktivität, als eine optische Dichte o. dgl. des Medienübertragungselements 36a.

Die Schnittstelle 32a umfasst einen Fluidkanal 94a, der fluidtechnisch getrennt von dem Speichervolumen 42a ausgebildet ist und dazu vorgesehen ist, zu einem Befüllen des Speichervolumens 42a einen Unterdruck an dem Ausgleichsraum 44a bereitzustellen. Insbesondere ist der Fluidkanal 94a als ein von der Schnittstelle 32a und/oder der Gehäuseeinheit 54a der Medienspeichervorrichtung 14a, insbesondere der Medienspeichereinheit 30a und/oder der Medienübertragungseinheit 34a, begrenztes Volumen ausgebildet, welches insbesondere zu einer Leitung eines Fluids, insbesondere Luft, vorgesehen ist. Vorzugsweise ist der Fluidkanal fluidtechnisch mit dem Ausgleichsraum verbunden. Bevorzugt ist der Fluidkanal 94a dazu vorgesehen, den Ausgleichsraum 44a fluidtechnisch mit einer die Medienspeichervorrichtung 14a umgebenden Umgebung 96a zu verbinden. Insbesondere ist der Fluidkanal 94a dazu vorgesehen, zum Befüllen des Speichervolumens 42a über die Schnittstelle 32a mit zumindest einer externen Kompressionseinheit verbunden zu werden, welche insbesondere in den Figuren nicht gezeigt ist. Vorzugsweise ist der Fluidkanal 94a, insbesondere ein umgebungsseitiger Teil des Fluidkanals, in einem Nahbereich des Leitungselements 82a und/oder des Medienübertragungselements 36a angeordnet. Der Fluidkanal 94a erstreckt sich zumindest im Wesentlichen parallel zu dem Medienübertragungselement 36a von dem Ausgleichsraum 44a zu der Schnittstelle 32a. Es sind aber auch andere Ausgestaltungen des Fluidkanals 94a denkbar.

Die Schnittstelle 32a umfasst eine Dichtungseinheit 98a, die dazu vorgesehen ist, zumindest einen an dem Medienübertragungselement 36a angeordneten Ausgabebereich 80a der Schnittstelle 32a bei einer Verbindung der Schnittstelle 32a mit der Medienausgabeeinheit 12a zumindest im Wesentlichen luftdicht zu verschließen. Vorzugsweise ist die Dichtungseinheit 98a der Schnittstelle 32a dazu vorgesehen, einem durch eine Bewegung des Medienausgabeelements 46a bewirkten Druckunterschied zwischen dem Ausgabebereich 80a und der die Schnittstelle 32a, insbesondere die Dichtungseinheit 98a der Schnittstelle 32a, umgebenden Umgebung 96a entgegenzuwirken, insbesondere zu einem Verhindern eines Fluidstroms zwischen dem Ausgabebereich 80a und der Umgebung 96a. Bevorzugt ist die Dichtungseinheit 98a der Schnittstelle 32a dazu vorgesehen, Luftströmungen innerhalb des Ausgabebereichs 80a, insbesondere in dem verbundenen Zustand der Schnittstelle 32a, entgegenzuwirken, insbesondere zumindest im Wesentlichen zu vermeiden. Bevorzugt umfasst die Dichtungseinheit 98a der Schnittstelle 32a zumindest ein Dichtungselement 100a, welches den Ausgabebereich 80a in zumindest einer Ebene, insbesondere einer zumindest im Wesentlichen senkrecht zur Medienausgaberichtung 68a ausgerichteten Ebene, zumindest im Wesentlichen vollständig umschließt. Bevorzugt ist das Dichtungselement 100a zumindest im Wesentlichen ringförmig ausgebildet. Insbesondere ist das Dichtungselement 100a aus einem flexiblen Dichtungsmaterial, wie beispielsweise Gummi oder Kunststoff, ausgebildet. Bevorzugt ist die Dichtungseinheit 98a der Schnittstelle 32a, insbesondere das Dichtungselement 100a, dazu vorgesehen, den mit einem Unterdruck beaufschlagten Ausgabebereich 80a zumindest im Wesentlichen luftdicht zu verschließen. Bevorzugt weist die Schnittstelle 32a, insbesondere in zumindest einer zumindest im Wesentlichen parallel zur Medienausgaberichtung 68a ausgerichteten Ebene betrachtet, zumindest eine Hinterschneidung 102a auf, die sich, insbesondere in einer zumindest im Wesentlichen senkrecht zur Medienausgaberichtung 68a ausgerichteten Ebene, zumindest im Wesentlichen vollständig um den Ausgabebereich 80a erstreckt. Bevorzugt ist das Dichtungselement 100a zumindest teilweise innerhalb der Hinterschneidung 102a angeordnet.

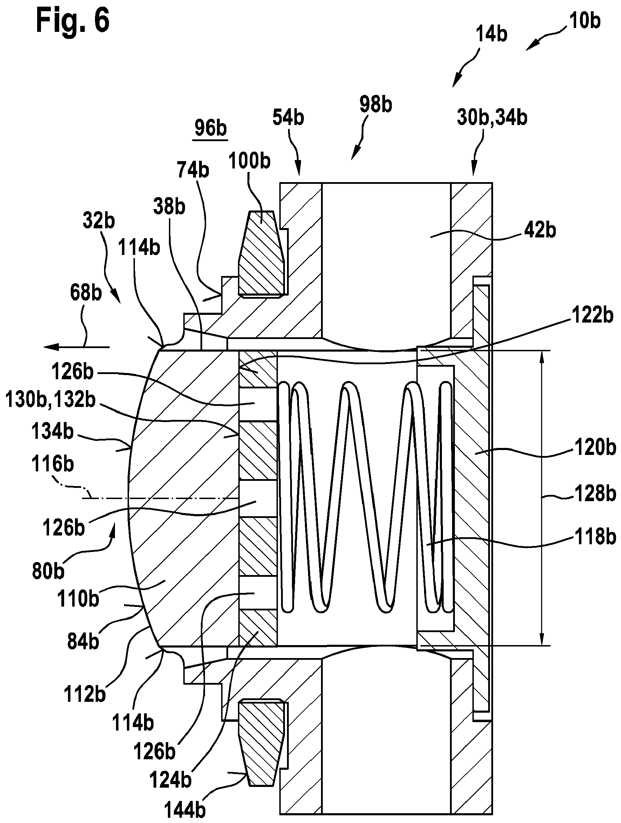

Zusätzlich ist denkbar, dass die Medienübertragungseinheit 34a zumindest ein, insbesondere flexibles, Formgebungs- und/oder Abdichtungselement 112a umfasst (siehe Figuren 6 bis 8), das dazu vorgesehen ist, in Abhängigkeit von zumindest einem Verbindungsparameter der Schnittstelle 32a zumindest einen Ausgabeparameter des Medienübertragungselements 36a anzupassen. Insbesondere ist das Formgebungs- und/oder Abdichtungselement 112a in der Figur 3 lediglich angedeutet gezeigt. Insbesondere in einer Ausgestaltung der Medienspeichervorrichtung 14a ohne Formgebungs- und/oder Abdichtungselement 112a ist das Medienübertragungselement 36a dazu vorgesehen, insbesondere in einem verbundenen Zustand der Schnittstelle 32a, direkt an dem Medienausgabeelement 46a angelegt zu werden.

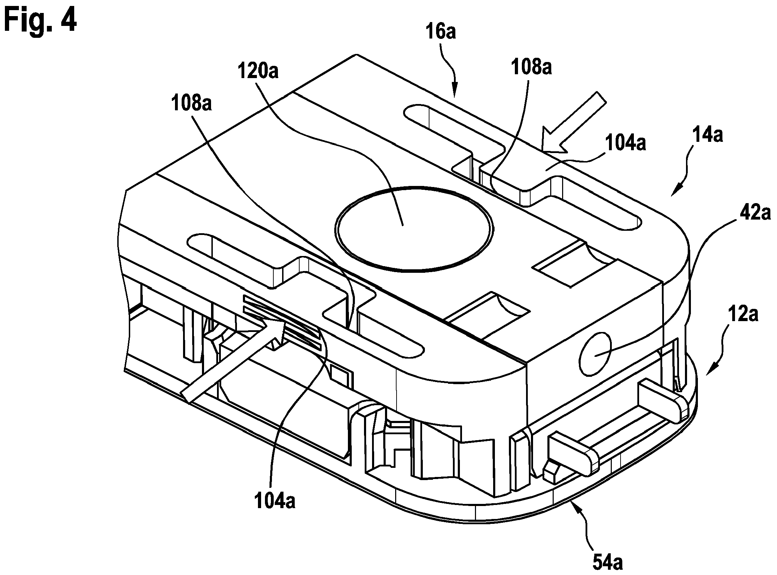

In Figur 4 ist das Medienauftragungssystem 10a in einem Bereich der Schnittstelle 32a und der Schnittstellenaufnahme 48a in einem miteinander verbundenen Zustand der Medienspeichervorrichtung 14a und der Medienausgabeeinheit 12a gezeigt. Die Medienspeichervorrichtung 14a ist über die Fixiereinheit 18a mit der Medienausgabeeinheit 12a verbunden. Die Fixiereinheit 18a umfasst zwei als Druckknöpfe ausgebildete Betätigungselemente 104a zu einem Lösen der Verbindung der Medienspeichervorrichtung 14a und der Medienausgabeeinheit 12a. Die zwei Betätigungselemente 104a sind seitlich an der Gehäuseeinheit 54a angeordnet. Es ist aber auch denkbar, dass die zwei Betätigungselemente 104a an der Medienausgabeeinheit 12a und/oder der Grundeinheit 16a angeordnet sind. Die zwei Betätigungselemente 104a sind dazu vorgesehen, in einander zugewandte Richtungen betätigt zu werden, wobei insbesondere jeweils eine schräge Fixierfläche 106a der Schnittstelle 32a auf eine zu der Fixierfläche 106a korrespondierend ausgebildete schräge Fixierfläche 108a der Schnittstellenaufnahme 48a bewegt wird (siehe auch Figur 8). Über ein Zusammenwirken der Fixierflächen 106a, 108a werden die Medienspeichervorrichtung 14a und die Medienausgabeeinheit 12a in entgegengesetzte Richtungen auseinander bewegt und insbesondere eine Verbindung der Medienspeichervorrichtung 14a und der Medienausgabeeinheit 12a getrennt (siehe Figur 8).

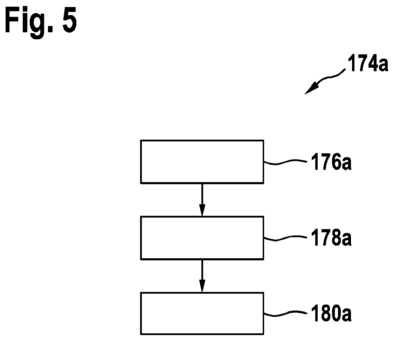

In Figur 5 ist ein beispielhafter Ablauf eines Verfahrens 174a zu einem Befüllen der Medienspeichervorrichtung 14a gezeigt. In zumindest einem Verfahrensschritt 176a des Verfahrens 174a wird das Medienübertragungselement 36a mit einem externen Medienreservoir verbunden, wobei insbesondere das Medienübertragungselement 36a direkt in das Medium und/oder das Medienreservoir hinein bewegt, und/oder eingetaucht wird. In einem weiteren Verfahrensschritt 178a des Verfahrens 174a wird der Fluidkanal 94a zumindest fluidtechnisch mit einer externen Kompressionseinheit verbunden. In zumindest einem weiteren Verfahrensschritt 180a des Verfahrens 174a wird mittels des Fluidkanals 94a der Schnittstelle 32a der Medienspeichervorrichtung 14a, insbesondere über die externe Kompressionseinheit, ein Unterdruck an dem an dem zu befüllenden Medienbegrenzungselement 40a der Medienspeichervorrichtung 14a angeordneten Ausgleichsraum 44a bereitgestellt, wobei über das Medienübertragungselement 36a der Medienübertragungseinheit 34a das zumindest eine Medium, insbesondere aus dem externen Medienreservoir, in das Medienbegrenzungselement 40a, insbesondere das Speichervolumen 42a, geleitet wird. Alternativ ist denkbar, dass das Medienübertragungselement 36a zu einem Befüllen des Speichervolumens 42a von der Schnittstelle 32a abgenommen wird, wobei insbesondere das Speichervolumen 42a über einen Unterdruck an dem Ausgleichsraum 44a direkt befüllbar ist.

In den Figuren 6 bis 10 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 10 ist der Buchstabe a durch die Buchstaben b bis e ersetzt.

In Figur 6 ist eine alternative Ausgestaltung einer Medienspeichervorrichtung 14b für ein Medienauftragungssystem 10b in einem Bereich einer Schnittstelle 32b der Medienspeichervorrichtung 14b gezeigt. Die Medienspeichervorrichtung 14b umfasst eine Medienspeichereinheit 30b zu einer Speicherung zumindest eines Mediums, eine, insbesondere mechanische, Schnittstelle 32b zu einer Verbindung mit einer Medienausgabeeinheit 12b des Medienauftragungssystems 10b (in Figur 6 nicht gezeigt) und eine Medienübertragungseinheit 34b zu einer Übertragung des Mediums von der Medienspeichereinheit 30b auf die Medienausgabeeinheit 12b in zumindest einem verbundenen Zustand der Schnittstelle 32b mit der Medienausgabeeinheit 12b. Die Medienübertragungseinheit 34b weist ein poröses Medienübertragungselement 110b auf, das an einem Ausgangskanal 38b der Medienspeichereinheit 30b angeordnet ist. Die in der Figur 6 dargestellte Medienspeichervorrichtung 14b weist eine zumindest im Wesentlichen analoge Ausgestaltung zu der in der Beschreibung der Figuren 1 bis 5 beschriebenen Medienspeichervorrichtung 14a auf, so dass bezüglich einer Ausgestaltung der in der Figur 6 dargestellten Medienspeichervorrichtung 14b zumindest im Wesentlichen auf die Beschreibung der Figuren 1 bis 5 verwiesen werden kann. Im Unterschied zu der in der Beschreibung der Figuren 1 bis 5 beschriebenen Medienspeichervorrichtung 14a weist die Medienübertragungseinheit 34b der in der Figur 6 dargestellten Medienspeichervorrichtung 14b vorzugsweise ein flexibles Formgebungs- und/oder Abdichtungselement 112b auf, das dazu vorgesehen ist, in Abhängigkeit von zumindest einem Verbindungsparameter der Schnittstelle 32b zumindest einen Ausgabeparameter des Medienübertragungselements 110b anzupassen. Insbesondere ist der Ausgabeparameter des Medienübertragungselements 110b als eine Form einer Ausgabefläche 84b des Medienübertragungselements 110b ausgebildet, welche insbesondere an dem Formgebungs- und/oder Abdichtungselement 112b angeordnet ist und/oder als eine Dichte des Medienübertragungselements 110b, insbesondere in einem Bereich der Ausgabefläche 84b, ausgebildet ist. Alternativ oder zusätzlich ist denkbar, dass der Ausgabeparameter als eine Form der Ausgabefläche 84b ausgebildet ist, welche, insbesondere über ein Zusammenwirken mit dem Formgebungs- und/oder Abdichtungselement 112b und/oder einem Medienausgabeelement 46b der Medienausgabeeinheit 12b (in Figur 6 nicht gezeigt) eine flächige Verteilung und/oder eine Menge des zu übertragenden Mediums beeinflusst. Das Medienübertragungselement 110b ist fluidtechnisch mit dem Speichervolumen 42b verbunden und dazu vorgesehen, das Medium aus dem Speichervolumen 42b, einem Ausgangskanal 38b und/oder einem Ausgabekanal der Medienübertragungseinheit 34b an das Formgebungs- und/oder Abdichtungselement 112b zu übertragen, wobei insbesondere das Medium durch das Formgebungs- und/oder Abdichtungselement 112b an das Medienausgabeelement 46b ausgegeben wird. Es ist denkbar, dass die Medienspeichervorrichtung 14b zumindest ein weiteres Medienübertragungselement umfasst, das insbesondere baugleich und/oder analog zu dem in den Figuren 1 bis 5 beschriebenen Medienübertragungselement 36a ausgebildet ist. Insbesondere ist denkbar, dass die Medienspeichervorrichtung 14b zumindest ein Medienbegrenzungselement umfasst, das insbesondere baugleich und/oder analog zu dem in den Figuren 1 bis 5 beschriebenen Medienbegrenzungselement 36a ausgebildet ist.

Das Formgebungs- und/oder Abdichtungselement 112b ist als eine Membran ausgebildet und weist, insbesondere in Abhängigkeit von einer Form des Formgebungs- und/oder Abdichtungselements 112b, zumindest einen fluiddurchlässigen Zustand und zumindest einen fluidundurchlässigen Zustand auf. Es ist auch denkbar, dass das Formgebungs- und/oder Abdichtungselement 112b als ein Gewebe, als eine poröse Schicht o. dgl. ausgebildet ist. Vorzugsweise weist das Formgebungs- und/oder Abdichtungselement 112b in dem fluiddurchlässigen Zustand, insbesondere hinsichtlich einer des Medienausgabeelements 46b zugewandten Seite, eine andere Form auf, wie in dem fluidundurchlässigen Zustand. Bevorzugt weist das Formgebungs- und/oder Abdichtungselement 112b in einem beabstandet von der Medienausgabeeinheit 12b ausgebildeten Zustand und/oder einem unverbundenen Zustand der Schnittstelle 32b den fluidundurchlässigen Zustand auf. Vorzugsweise weist das Formgebungs- und/oder Abdichtungselement 112b in einem mit der Medienausgabeeinheit 12b verbundenen und/oder angeordneten Zustand und/oder einem verbundenen Zustand der Schnittstelle 32b den fluiddurchlässigen Zustand auf. Vorzugsweise ist das Formgebungs- und/oder Abdichtungselement 112b über die Ausgabefläche 84b des Medienübertragungselements 110b gespannt und liegt insbesondere vollflächig an der Ausgabefläche 84b an. Insbesondere ist das Formgebungs- und/oder Abdichtungselement 112b in dem fluidundurchlässigen Zustand für das Medium undurchlässig ausgebildet. Insbesondere ist das Formgebungs- und/oder Abdichtungselement 112b in dem fluiddurchlässigen Zustand für das Medium durchlässig ausgebildet. Bevorzugt begrenzt das Formgebungs- und/oder Abdichtungselement 112b eine Vielzahl von Öffnungen, welche in dem fluidundurchlässigen Zustand derart ausgebildet sind, dass sie für das Medium undurchlässig ausgebildet sind. Insbesondere sind die Öffnungen in den Figuren nicht gezeigt. Bevorzugt ist das Formgebungs- und/oder Abdichtungselement 112b dazu vorgesehen, das Medium über Kapillarität von dem Medienübertragungselement 36b an die Medienausgabeeinheit 12b, insbesondere das Medienausgabeelement 46b, zu leiten. Insbesondere ist das Formgebungs- und/oder Abdichtungselement 112b derart ausgebildet, dass ein Kapillareffekt auf das Medium in Abhängigkeit von einem Kontakt des Formgebungs- und/oder Abdichtungselements 112b mit dem Medienausgabeelement 46b wirkt. Insbesondere ist das Formgebungs- und/oder Abdichtungselement 112b derart ausgebildet, dass bei einem Anliegen an dem Medienausgabeelement 46b der Kapillareffekt auf das Medium wirkt, wobei insbesondere das Medium von dem Medienübertragungselement 36b durch das Formgebungs- und/oder Abdichtungselement 112b zu dem Medienausgabeelement 46b geleitet wird. Insbesondere ist das Formgebungs- und/oder Abdichtungselement 112b derart ausgebildet, dass in einem von dem Medienausgabeelement 46b getrennten Zustand des Formgebungs- und/oder Abdichtungselements 112b, in dem insbesondere Luft an dem Formgebungs- und/oder Abdichtungselement 112b anliegt, das an oder in dem Formgebungs- und/oder Abdichtungselement 112b angeordnete Medium zumindest im Wesentlichen kräftefrei ausgebildet ist, wobei insbesondere das Formgebungs- und/oder Abdichtungselement 112b fluidundurchlässig ausgebildet ist. Alternativ oder zusätzlich ist denkbar, dass das Formgebungs- und/oder Abdichtungselement 112b derart ausgebildet ist, dass die Öffnungen des Formgebungs- und/oder Abdichtungselements 112b bei einem Übergang in den fluiddurchlässigen Zustand, insbesondere durch eine Verformung und/oder Streckung des Formgebungs- und/oder Abdichtungselements 112b, geöffnet, geweitet und/oder freigegeben werden, wobei insbesondere die Öffnungen für das Medium durchlässig ausgebildet sind. Insbesondere ist das Formgebungs- und/oder Abdichtungselement 112b in dem fluidundurchlässigen Zustand, in dem beabstandet von der Medienausgabeeinheit 12b ausgebildeten Zustand und/oder dem unverbundenen Zustand der Schnittstelle 32b in einem gespannten Zustand ausgebildet, wobei insbesondere das Formgebungs- und/oder Abdichtungselement 112b über das Medienübertragungselement 110b, insbesondere die Ausgabefläche 84b, gespannt ist. Bevorzugt ist das Formgebungs- und/oder Abdichtungselement 112b an einer Randfläche 114b des Ausgabekanals 38b und/oder des Ausgangskanals befestigt. Insbesondere ist das Formgebungs- und/oder Abdichtungselement 112b mit der Randfläche 114b des Ausgabekanals 38b und/oder des Ausgangskanals stoffschlüssig verbunden, beispielsweise mittels einer Klebeverbindung, einer Klemmverbindung o. dgl. Insbesondere ist das Formgebungs- und/oder Abdichtungselement 112b in der Figur 6 in dem fluidundurchlässigen Zustand gezeigt.

Das Formgebungs- und/oder Abdichtungselement 112b ist dazu vorgesehen, insbesondere in zumindest einem Betriebszustand, direkt an einem beweglichen Medienausgabeelement 46b, insbesondere einer Membran, der Medienausgabeeinheit 12b angelegt zu werden. Bevorzugt umfasst das Formgebungs- und/oder Abdichtungselement 112b zumindest eine Mittelachse 116b, welche insbesondere zumindest im Wesentlichen parallel zu einer Medienausgaberichtung 68b angeordnet ist. Vorzugsweise ist das Formgebungs- und/oder Abdichtungselement 112b, insbesondere in dem verbundenen Zustand der Schnittstelle 32b und/oder einem an dem Medienausgabeelement 46b angeordneten Zustand des Formgebungs- und/oder Abdichtungselements 112b, derart angeordnet und/oder ausgebildet, dass eine Mittelachse des Medienausgabeelements 46b identisch zu der Mittelachse 116b des Formgebungs- und/oder Abdichtungselements 112b ausgebildet ist. Insbesondere ist das Formgebungs- und/oder Abdichtungselement 112b dazu vorgesehen, mittig auf dem Medienausgabeelement 46b aufgelegt zu werden. Es ist denkbar, dass das Formgebungs- und/oder Abdichtungselement 112b dazu vorgesehen ist, in zumindest einem Betriebszustand flächig an dem Medienausgabeelement 46b anzuliegen.

Das Medienübertragungselement 110b ist zu einer Übertragung des Mediums von der Medienspeichereinheit 30b an das Formgebungs- und/oder Abdichtungselement 112b vorgesehen, wobei das Formgebungs- und/oder Abdichtungselement 112b an der Ausgabefläche 84b des Medienübertragungselements 110b anliegt und insbesondere dazu vorgesehen ist, eine Form des Medienübertragungselements 110b, insbesondere der Ausgabefläche 84b, vorzugeben. Vorzugsweise weist die Form des Medienübertragungselements 110b und/oder des Formgebungs- und/oder Abdichtungselements 112b, insbesondere in dem unverbundenen Zustand der Schnittstelle 32b und/oder in einem von der Medienausgabeeinheit 12b beabstandeten Zustand der Medienübertragungseinheit 34b (siehe Figur 6), eine zumindest im Wesentlichen kuppel-, kugel-, kegel- oder haubenförmige Grundform auf. Insbesondere weist die Form des Medienübertragungselements 110b und/oder des Formgebungs- und/oder Abdichtungselements 112b, insbesondere in dem unverbundenen Zustand der Schnittstelle 32b und/oder in einem von der Medienausgabeeinheit 12b beabstandeten Zustand der Medienübertragungseinheit 34b, in zumindest einer Schnittebene, insbesondere durch die Mittelachse 116b des Formgebungs- und/oder Abdichtungselements 112b, eine kreisbogen-, parabel- oder zapfenförmige Kontur auf. Besonders bevorzugt ist das Formgebungs- und/oder Abdichtungselement 112b dazu vorgesehen, bei einem Verbinden mit der Medienausgabeeinheit 12b und/oder der Schnittstellenaufnahme 48b, insbesondere durch ein Zusammenwirken mit dem Medienausgabeelement 46b zumindest abschnittsweise, insbesondere in einem Bereich um die Mittelachse des Formgebungs- und/oder Abdichtungselements 112b, entgegen der Medienausgaberichtung 68b verformt und/oder eingedrückt zu werden, wobei vorzugsweise das Formgebungs- und/oder Abdichtungselement 112b von dem fluidundurchlässigen Zustand in den fluiddurchlässigen Zustand überführt wird.

Die Medienübertragungseinheit 34b umfasst ein Spannelement 118b, das dazu vorgesehen ist, das Formgebungs- und/oder Abdichtungselement 112b entgegen die Medienausgaberichtung 68b der Medienübertragungseinheit 34b mit einer Spannkraft zu beaufschlagen. Beispielsweise ist das, insbesondere als Federelement ausgebildete, Spannelement 118b als eine Druckfeder ausgebildet. Vorzugsweise ist das Spannelement 118b zumindest teilweise, insbesondere zumindest größtenteils, innerhalb des Ausgabekanals 38b und/oder des Ausgangskanals angeordnet. Vorzugsweise ist das Spannelement 118b mit einem Ende des Spannelements 118b an einer den Ausgabekanal 38b und/oder den Ausgangskanal begrenzenden Wand 120b der Medienübertragungseinheit 34b und/der Medienspeichereinheit 30b angeordnet. Bevorzugt ist das Spannelement 118b mit einem anderen Ende des Spannelements 118b, welches insbesondere dem Ende gegenüberliegend angeordnet ist, an dem Medienübertragungselement 110b, insbesondere einer Kraftaufnahmefläche 122b des Medienübertragungselements 110b und/oder einem Stützelement 124b der Medienübertragungseinheit 34b angeordnet, welches an dem Medienübertragungselement 110b, insbesondere der Kraftaufnahmefläche 122b, angeordnet ist, insbesondere anliegt.

Die Medienübertragungseinheit 34b umfasst das Stützelement 124b, das dazu vorgesehen ist, die Spannkraft zumindest im Wesentlichen gleichmäßig über eine Ausgabefläche 84b des Formgebungs- und/oder Abdichtungselements 112b verteilt an das Formgebungs- und/oder Abdichtungselement 112b zu übertragen. Besonders bevorzugt ist das Stützelement 124b dazu vorgesehen ist, die Spannkraft zumindest im Wesentlichen gleichmäßig über die Kraftaufnahmefläche 122b des Medienübertragungselements 110b verteilt an das Medienübertragungselement 110b zu übertragen. Besonders bevorzugt ist das Stützelement 124b in die Medienausgaberichtung 68b fluiddurchlässig und/oder für das Medium durchlässig ausgebildet. Das Stützelement 124b begrenzt eine Vielzahl von Durchführungen 126b zu einer Leitung des Mediums an das Medienübertragungselement 110b. Insbesondere sind die Durchführungen 126b über eine maximale Quererstreckung 128b des Stützelements 124b und/oder über eine Stützfläche 130b des Stützelements 124b, welche insbesondere zumindest im Wesentlichen senkrecht zur Medienausgaberichtung 68b ausgerichtet sind/ist, verteilt angeordnet. Bevorzugt ist die Stützfläche 130b dazu vorgesehen, an dem Medienübertragungselement 110b angelegt zu werden und insbesondere ein/einem Verrutschen des Medienübertragungselements 110b relativ zu dem Stützelement 124b zumindest im Wesentlichen zu vermeiden und/oder entgegenzuwirken. Es ist denkbar, dass das Stützelement 124b an der Stützfläche 130b zumindest eine Haftstruktur 132b aufweist, die beispielsweise aus einer Vielzahl von Fortsätzen, Nuten und/oder Wellen ausgebildet ist, welche dazu vorgesehen sind, an dem Medienübertragungselement 110b, insbesondere der Kraftaufnahmefläche 122b, anzugreifen. Vorzugsweise ist das Stützelement 124b zumindest größtenteils, insbesondere zumindest im Wesentlichen vollständig, innerhalb des Ausgabekanals und/oder des Ausgangskanals 38b angeordnet. Insbesondere ist das Stützelement 124b zwischen dem Spannelement 118b und dem Medienübertragungselement 110b angeordnet. Das Stützelement 124b ist insbesondere plattenförmig ausgebildet und weist eine kreisförmige Grundfläche auf. Die Durchführungen 126b erstrecken sich über eine gesamte Dicke des Stützelements 124b, insbesondere von einer dem Spannelement 118b zugewandten Seite des Stützelements 124b bis zur Stützfläche 130b und/oder einer dem Medienübertragungselement 110b zugewandten Seite des Stützelements 124b.

Die Schnittstelle 32b umfasst eine Dichtungseinheit 98b, die dazu vorgesehen ist, zumindest einen an dem Formgebungs- und/oder Abdichtungselement 112b angeordneten Ausgabebereich 80b der Schnittstelle 32b bei einer Verbindung der Schnittstelle 32b mit der Medienausgabeeinheit 12b und/oder der Schnittstellenaufnahme 48b zumindest im Wesentlichen luftdicht zu verschließen. Vorzugsweise ist die Dichtungseinheit 98b der Schnittstelle 32b dazu vorgesehen, einem durch eine Bewegung des Medienausgabeelements 46b und/oder durch eine Ausgabe des Mediums an dem Formgebungs- und/oder Abdichtungselement 112b bewirkten Druckunterschied zwischen dem Ausgabebereich 80b und einer die Schnittstelle 32b, insbesondere die Dichtungseinheit 98b der Schnittstelle 32b, umgebenden Umgebung 96b entgegenzuwirken, insbesondere zu einem Verhindern eines Fluidstroms zwischen dem Ausgabebereich 80b und der Umgebung 96b. Insbesondere ist denkbar, dass die Medienspeichereinheit 30b zumindest ein, insbesondere flexibles, Medienbegrenzungselement umfasst, welches insbesondere zumindest teilweise das Speichervolumen 42b begrenzt. Zusätzlich ist denkbar, dass die Medienspeichervorrichtung 12b zumindest ein Rückstellelement umfasst, welches insbesondere dazu vorgesehen ist, an dem Medienbegrenzungselement anzugreifen und einen Unterdruck im Speichervolumen 42b bereitzustellen. Es ist insbesondere denkbar, dass das Spannelement 118b als Rückstellelement ausgebildet ist, wobei insbesondere das Spannelement 118b dazu vorgesehen ist, Funktionen eines Rückstellelements auszuführen. Das Rückstellelement ist vorzugsweise dazu vorgesehen, das flexible Medienbegrenzungselement mit einer Rückstellkraft zu beaufschlagen. Besonders bevorzugt wirkt das Rückstellelement, insbesondere die Rückstellkraft, der Kapillarwirkung des Medienübertragungselements 110b, einem Kompressionsdruck des Mediums innerhalb des Speichervolumens 42b und/oder einem Fluiddruck eines Ausgleichsraums entgegen.

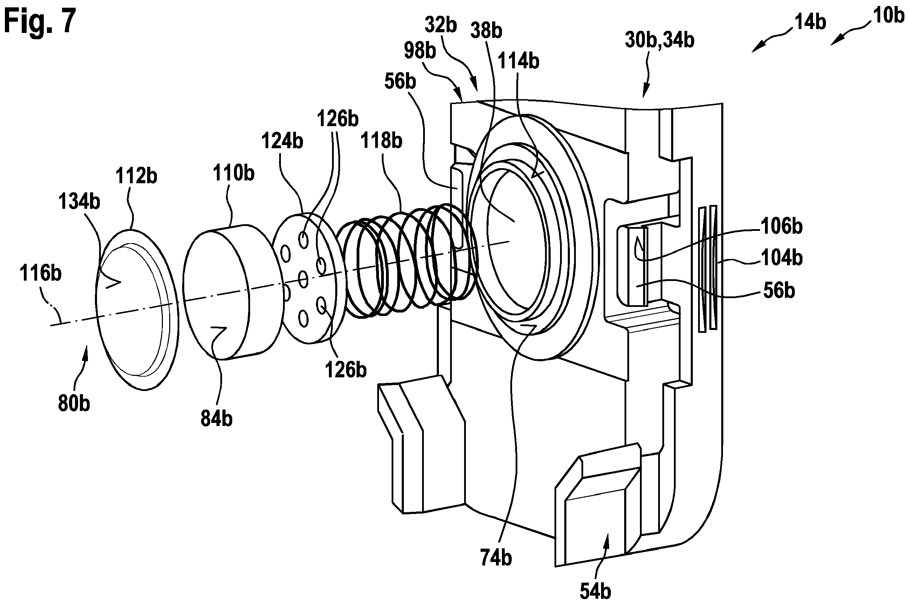

Figur 7 zeigt eine Explosionszeichnung der Medienspeichervorrichtung 14b in einem Bereich der Schnittstelle 32b. Das Medienübertragungselement 110b weist in einem von dem Formgebungs- und/oder Abdichtungselement 112b beabstandeten Zustand des Medienübertragungselements 110b eine zylinderförmige Grundform auf. Insbesondere ist das Formgebungs- und/oder Abdichtungselement 112b dazu vorgesehen, in einem montierten und/oder einem an dem Medienübertragungselement 110b angeordneten Zustand des Formgebungs- und/oder Abdichtungselements 112b, eine Form des Medienübertragungselements 110b anzupassen. Das Formgebungs- und/oder Abdichtungselement 112b, das Medienübertragungselement 110b, das Stützelement 124b und das Spannelement 118b sind insbesondere jeweils einstückig ausgebildet und liegen in einem montierten Zustand der Medienübertragungseinheit 34b aneinander an. Es ist auch denkbar, dass das Formgebungs- und/oder Abdichtungselement 112b, das Medienübertragungselement 110b, das Stützelement 124b und das Spannelement 118b zumindest teilweise stoffschlüssig miteinander verbunden sind. Zusätzlich ist denkbar, dass die Medienspeichervorrichtung 14b zumindest eine Sensoreinheit zu einem Bestimmen einer Füllstandskenngröße der Medienspeichereinheit an der Medienübertragungseinheit umfasst, beispielsweise ähnlich zu der Sensoreinheit 86a (siehe Figur 3). Vorzugsweise ist denkbar, dass die Sensoreinheit zumindest ein Sensorelement aufweist, das dazu vorgesehen ist, zum Bestimmen der Füllstandskenngröße zumindest eine Durchsatzkenngröße des Medienübertragungselements 110b zu erfassen, wobei bevorzugt die Durchsatzkenngröße als ein elektrischer Widerstand des Medienübertragungselements 110b ausgebildet ist.

In Figur 8 ist eine weitere alternative Ausgestaltung einer Medienspeichervorrichtung 14c eines Medienauftragungssystems 10c gezeigt. Das Medienauftragungssystem 10c umfasst die Medienspeichervorrichtung 14c und eine Medienausgabeeinheit 12c, die zumindest ein bewegliches Medienausgabeelement 46c zu einer gerichteten Ausgabe eines Mediums aufweist. Die Medienspeichervorrichtung 14c umfasst eine Medienspeichereinheit 30c zu einer Speicherung zumindest eines Mediums, eine mechanische Schnittstelle 32c zu einer Verbindung mit der Medienausgabeeinheit 12c des Medienauftragungssystems 10c und eine Medienübertragungseinheit 34c zu einer Übertragung des Mediums von der Medienspeichereinheit 30c auf die Medienausgabeeinheit 12c in zumindest einem verbundenen Zustand der Schnittstelle 32c mit der Medienausgabeeinheit 12c. Die Medienübertragungseinheit 34c umfasst ein poröses Medienübertragungselement 110c, das an einem Ausgangskanal 38c der Medienspeichereinheit 30c angeordnet ist. Die Medienübertragungseinheit 34c umfasst ein flexibles Formgebungs- und/oder Abdichtungselement 112c, das dazu vorgesehen ist, in Abhängigkeit von zumindest einem Verbindungsparameter der Schnittstelle 32c zumindest einen Ausgabeparameter des Medienübertragungselements 110c anzupassen. Das Medienauftragungssystem 10c umfasst eine Schnittstellenaufnahme 48c zu einer Aufnahme der Schnittstelle 32c der Medienspeichervorrichtung 14c zu einer Verbindung der Medienspeichervorrichtung 14c und der Medienausgabeeinheit 12c. Die in der Figur 8 dargestellte Medienspeichervorrichtung 14c weist eine zumindest im Wesentlichen analoge Ausgestaltung zu der in der Beschreibung der Figuren 6 und 7 beschriebenen Medienspeichervorrichtung 14b auf, so dass bezüglich einer Ausgestaltung der in der Figur 8 dargestellten Medienspeichervorrichtung 14c zumindest im Wesentlichen auf die Beschreibung der Figuren 6 und 7 verwiesen werden kann. Im Unterschied zu der in der Beschreibung der Figuren 6 und 7 beschriebenen Medienspeichervorrichtung 14b weist das Formgebungs- und/oder Abdichtungselement 112c der Medienübertragungseinheit 34c der in der Figur 8 dargestellten Medienspeichervorrichtung 14c vorzugsweise eine unterschiedliche Form auf. Das Formgebungs- und/oder Abdichtungselement 112c ist in der Figur 8 in einem an dem Medienausgabeelement 46c angeordneten Zustand gezeigt, wobei das Formgebungs- und/oder Abdichtungselement 112c insbesondere eine ebenflächige Übertragungsfläche 134c aufweist, über die das Formgebungs- und/oder Abdichtungselement 112c das Medium an das Medienausgabeelement 46c überträgt. Das Medienübertragungselement 110c der Medienübertragungseinheit 34c begrenzt mehrere Durchführungen 136c, die das Medium von einem Speichervolumen 42c der Medienspeichervorrichtung 14c über ein Stützelement 124c der Medienübertragungseinheit 34c an das Formgebungs- und/oder Abdichtungselement 112c überträgt. Vorzugsweise sind die von dem Medienübertragungselement 110c begrenzten Durchführungen 136c dazu vorgesehen, das Medium entlang der Übertragungsfläche 134c zumindest im Wesentlichen gleichmäßig verteilt an das Formgebungs- und/oder Abdichtungselement 112c zu übertragen.

Die Schnittstelle 32c umfasst eine Dichtungseinheit 98c, die dazu vorgesehen ist, zumindest einen an dem Formgebungs- und/oder Abdichtungselement 112c angeordneten Ausgabebereich 80c der Schnittstelle 32c bei einer Verbindung der Schnittstelle 32c mit der Medienausgabeeinheit 12c zumindest im Wesentlichen luftdicht zu verschließen. Die Schnittstellenaufnahme 48c umfasst eine Dichtungseinheit 138c, die dazu vorgesehen ist, den Ausgabebereich 80c der Schnittstelle 32c, an dem das Medienausgabeelement 46c und ein Formgebungs- und/oder Abdichtungselement 112c der Medienspeichervorrichtung 14c angeordnet ist, insbesondere durch ein Zusammenwirken mit einer Dichtungseinheit 98c der Schnittstelle 32c, zumindest im Wesentlichen luftdicht zu verschließen. Die Schnittstellenaufnahme 48c ist zu einem Zusammenwirken mit der Schnittstelle 32c der Medienspeichervorrichtung 14c bei einem Verbinden der Medienspeichervorrichtung 14c mit der Medienausgabeeinheit 12c vorgesehen. Vorzugsweise ist die Dichtungseinheit 138c der Schnittstellenaufnahme 48c korrespondierend zu der Dichtungseinheit 98c der Schnittstelle 32c ausgebildet, wobei zumindest eine Dichtfläche 140c und/oder ein Dichtungselement 142c der Dichtungseinheit 138c der Schnittstellenaufnahme 48c an einem Dichtungselement 100c der Dichtungseinheit 98c der Schnittstelle 32c anliegt. Die Dichtungseinheit 98c der Schnittstelle 32c und die Dichtungseinheit 138c der Schnittstellenaufnahme 48c umfassen jeweils ein Dichtungselement 100c, 142c. Das Dichtungselement 100c der Dichtungseinheit 98c der Schnittstelle 32c ist als ein Dichtungsring, insbesondere aus Gummi und/oder einem Kunststoff, ausgebildet. Die Dichtungselemente 100c, 142c weisen jeweils eine keilförmige Kontur auf. Die Dichtungselemente 100c, 142c weisen jeweils eine schräge Dichtfläche 140c, 144c auf. Das Dichtungselement 100c der Dichtungseinheit 98c der Schnittstelle 32c liegt an einer Hinterschneidung 102c der Schnittstelle 32c an und umfasst die nach außen abgeschrägte Dichtfläche 144c. Das Dichtungselement 142c der Dichtungseinheit 138c der Schnittstellenaufnahme 48c ist einstückig mit einer Gehäuseeinheit der Medienausgabeeinheit 12c ausgebildet und weist eine nach innen abgeschrägte Dichtfläche 140c auf. Bevorzugt sind das Dichtungselement 100c der Schnittstelle 32c und das Dichtungselement 142c der Schnittstellenaufnahme 48c dazu vorgesehen, zu einem zumindest im Wesentlichen luftdichten Verschließen des Ausgabebereichs 80c zusammenzuwirken, wobei die Dichtflächen 140c, 144c vorzugsweise aneinander angeordnet sind und/oder aufeinander liegen. Bevorzugt ist der Ausgabebereich 80c von der Medienspeichervorrichtung 14c und der Medienausgabeeinheit 12c gebildet. Insbesondere begrenzt das Medienausgabeelement 46c und das Formgebungs- und/oder Abdichtungselement 112c den Ausgabebereich 80c jeweils zumindest teilweise. Bevorzugt werden die Dichtungselemente 100c, 142c über eine Fixierungseinheit 18c des Medienauftragungssystems 10c mit zumindest einer Fixierkraft gegeneinander beaufschlagt.

Die Medienausgabeeinheit 12c umfasst eine Aufhängung 146c, die dazu vorgesehen ist, einer Dämpfung einer Bewegung des Medienausgabeelements 46c, insbesondere zu einer Ausgabe des Mediums, über das Formgebungs- und/oder Abdichtungselement 112c der Medienspeichervorrichtung 14c entgegenzuwirken und/oder die Dämpfung zu minimieren. Vorzugsweise umschließt die Aufhängung 146c das Medienausgabeelement 46c in einer Haupterstreckungsebene des Medienausgabeelements 46c und/oder einer zumindest im Wesentlichen senkrecht zur Medienausgaberichtung 68c ausgerichteten Ebene betrachtet zumindest im Wesentlichen vollständig. Bevorzugt umschließt die Aufhängung 146c das Medienausgabeelement 46c in einer zumindest im Wesentlichen parallel zur Medienausgaberichtung 68c und/oder zur Haupterstreckungsebene des Medienausgabeelements 46c ausgerichteten Ebene betrachtet in einem Randbereich 148c des Medienausgabeelements 46c zumindest größtenteils. Insbesondere umgreift die Aufhängung 146c der Medienausgabeeinheit 12c im Randbereich 148c des Medienausgabeelements 46c um eine Mittelachse des Medienausgabeelements 46c. Vorzugsweise ist die Aufhängung Medienausgabeelements 46c form- und/oder kraftschlüssig mit der Dichtungseinheit 138c der Schnittstellenaufnahme 48c und/oder mit der Gehäuseeinheit der Medienausgabeeinheit 12c verbunden. Es ist denkbar, dass das Medienausgabeelement 46c mittels der Aufhängung 146c entnehmbar oder wechselbar ausgebildet ist. Vorzugsweise ist die Aufhängung 146c dazu vorgesehen, das Medienausgabeelement 46c in dem Randbereich 148c, insbesondere hinsichtlich des Ausgabebereichs 80c, zumindest im Wesentlichen luftdicht zu verschließen. Vorzugsweise begrenzt die Aufhängung 146c zumindest eine, insbesondere kreisringförmige, Ausnehmung 150c zu einer Aufnahme des Medienausgabeelements 46c. Bevorzugt ist die Aufhängung 146c kreisringförmig ausgebildet. Vorzugsweise ist das Medienausgabeelement 46c zumindest teilelastisch, insbesondere elastisch verformbar, ausgebildet, insbesondere zu Schwingungen anregbar. Bevorzugt weist das Medienausgabeelement 46c eine Mehrzahl von Mediendurchtrittsöffnungen auf, durch die das Medium ausbringbar ist, welche insbesondere in der Figur 8 nicht gezeigt sind. Alternativ oder zusätzlich ist denkbar, dass die Medienausgabeeinheit 12c ein weiteres Dichtungselement umfasst, welches insbesondere in der Figur 8 nicht gezeigt ist. Insbesondere ist das weitere Dichtungselement an der Aufhängung 146c angeordnet und dazu vorgesehen, das Medienausgabeelement 46c in dem Randbereich 148c, insbesondere hinsichtlich des Ausgabebereichs 80c, zumindest im Wesentlichen luftdicht zu verschließen. Die Mediendurchtrittsöffnungen sind insbesondere als eine Perforation bzw. Lochung des Medienausgabeelements 46c ausgebildet. Das Medienausgabeelement 46c ist insbesondere als eine Ultraschallmembran, als eine Ultraschallplatte o. dgl. ausgebildet. Das Medienausgabeelement 46c ist in einer Haupterstreckungsebene des Medienausgabeelements 46c betrachtet bevorzugt kreisflächenförmig ausgebildet. Alternativ ist denkbar, dass das Medienausgabeelement 46c in der Haupterstreckungsebene des Medienausgabeelements 46c betrachtet ellipsenflächenförmig, polygonal, beispielsweise quadratflächenförmig oder dreiecksflächenförmig, o. dgl. ausgebildet ist. Vorzugsweise umfasst die Medienausgabeeinheit 12c zumindest ein Aktuatorelement 62c, das insbesondere als ein Piezoelement ausgebildet ist, zu einer, insbesondere schwingenden, Anregung des Medienausgabeelements 46c. Insbesondere ist das Aktuatorelement 62c an dem Medienausgabeelement 46c, insbesondere dem Randbereich 148c, angeordnet. Vorzugsweise umschließt die Aufhängung 146c das Aktuatorelement 62c entlang einer/der Mittelachse 152c des Medienausgabeelements 46c, der Aufhängung 146c und/oder des Aktuatorelements 62c zumindest größtenteils, insbesondere zumindest im Wesentlichen vollständig. Insbesondere begrenzt die Aufhängung 146c Leiterführungen zu einer elektrischen Ansteuerung des Aktuatorelements 62c. Die Aufhängung 146c weist in einem Außenbereich 154c, welcher insbesondere an einem der Mittelachse 152c der Aufhängung 146c, des Aktuatorelements 62c und/oder des Medienausgabeelements 46c abgewandten Außenseite der Aufhängung 146c angeordnet ist, zwei Nuten 156c auf. Die zwei Nuten 156c erstrecken sich jeweils entlang der Mittelachse 152c der Aufhängung 146c, des Aktuatorelements 62c und/oder des Medienausgabeelements 46c betrachtet an zwei voneinander abgewandten Enden der Aufhängung 146c. Die zwei Nuten 156c sind jeweils dazu vorgesehen, mit zumindest einem Fortsatz 158c der Gehäuseeinheit 52c der Medienausgabeeinheit 12c zusammenzuwirken, welcher zu einem Fixieren der Aufhängung 146c in eine der Nuten 156c eingreift. Alternativ ist auch denkbar, dass die Gehäuseeinheit 52c zumindest einen Fortsatz 158c, insbesondere eine Mehrzahl an Fortsätzen 158c, ausbildet, welcher insbesondere dazu vorgesehen ist, zu einem Fixieren der Aufhängung 146c in von der Aufhängung begrenzte Nuten 156c einzugreifen. Die Aufhängung 146c ist beispielsweise aus einem bewegungsdämpfenden, vorzugsweise biegeweichen und/oder zumindest im Wesentlichen formstabilen, Material ausgebildet, beispielsweise Gummi, einem Kunststoff, insbesondere einem Elastomer, o. dgl. Alternativ ist auch denkbar, dass die Aufhängung 146c einstückig mit der Dichtungseinheit 98c, insbesondere dem Dichtungselement 100c der Schnittstellenaufnahme 48c, ausgebildet, wobei sich insbesondere das Dichtungselement 100c der Schnittstellenaufnahme 48c in eine dem Medienausgabeelement 46c abgewandte Richtung an der Aufhängung 146c erstreckt.

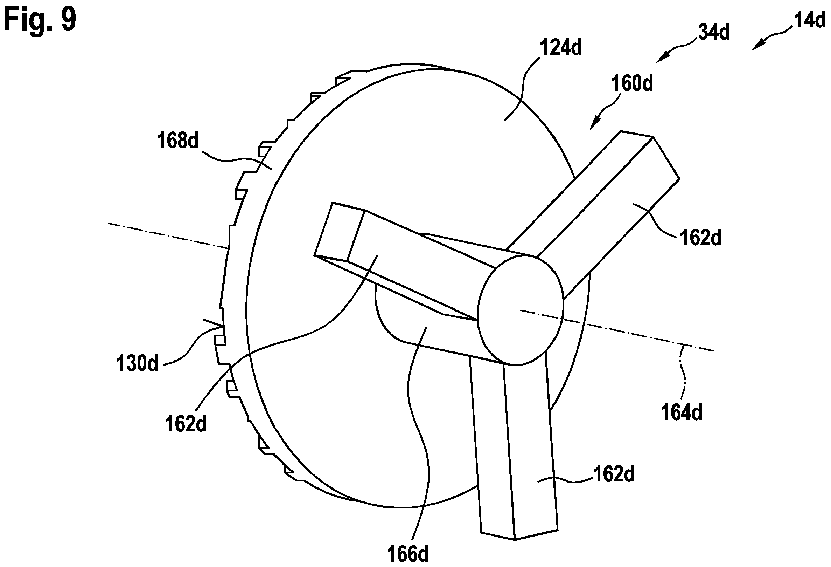

Figur 9 zeigt eine weitere alternative Ausgestaltung eines Stützelements 124d einer Medienübertragungseinheit 34d einer Medienspeichervorrichtung 14d. Das in der Figur 9 dargestellte Stützelement 124d weist eine zumindest im Wesentlichen analoge Ausgestaltung zu dem in der Beschreibung der Figuren 6 und 7 beschriebenen Stützelement 124b auf, so dass bezüglich einer Ausgestaltung des in der Figur 9 dargestellten Stützelements 124d zumindest im Wesentlichen auf die Beschreibung der Figuren 6 und 7 verwiesen werden kann. Im Unterschied zu dem in der Beschreibung der Figuren 6 und 7 beschriebenen Stützelement 124b bildet das in der Figur 8 dargestellte Stützelement 124d vorzugsweise zumindest einen Stützfortsatz 160d aus, welcher dazu vorgesehen ist, eine Spannkraft eines Spannelements 118d der Medienübertragungseinheit 34d aufzunehmen. Vorzugsweise weist das Stützelement 124d eine Stützfläche 130d auf, welche eine kleinere maximale Quererstreckung 128d aufweist als ein Ausgangskanal 38d (siehe Figuren 6 und 7), in dem das Stützelement 124d angeordnet ist. Der Stützfortsatz 160d ist an einer der Stützfläche 130d abgewandten Seite des Stützelements 124d angeordnet. Insbesondere ist der Stützfortsatz 160d dazu vorgesehen, das Stützelement 124d bei einer Bewegung innerhalb des Ausgangskanals 38d (in Figur 9 nicht gezeigt) an den Ausgangskanal 38d begrenzenden Innenflächen der Medienübertragungseinheit 34d zu führen. Der Stützfortsatz 160d umfasst zumindest drei Stützstreben 162d, welche um eine Mittelachse 164d der Stützelements 124d durch die Stützfläche 130d zumindest im Wesentlichen gleichmäßig verteilt angeordnet sind. Die Stützstreben 162d sind über einen auf der Mittelachse 164d angeordneten Stift 166d mit der Stützfläche 130d, insbesondere einer die Stützfläche 130d aufweisenden Platte 168d des Stützelements 124d, verbunden. Die die Stützfläche 130d aufweisende Platte 168d und der Stützfortsatz 160d, insbesondere der Stift 166d und die drei Stützstreben 162d, bilden das Stützelement 124d und sind insbesondere einstückig ausgebildet. Die drei Stützstreben 162d erstrecken sich innerhalb einer zumindest im Wesentlichen senkrecht zur Mittelachse 164d des Stützelements 124d ausgerichteten Ebene, insbesondere von dem Stift 166d zu den Innenwänden des Ausgangskanals 38d.

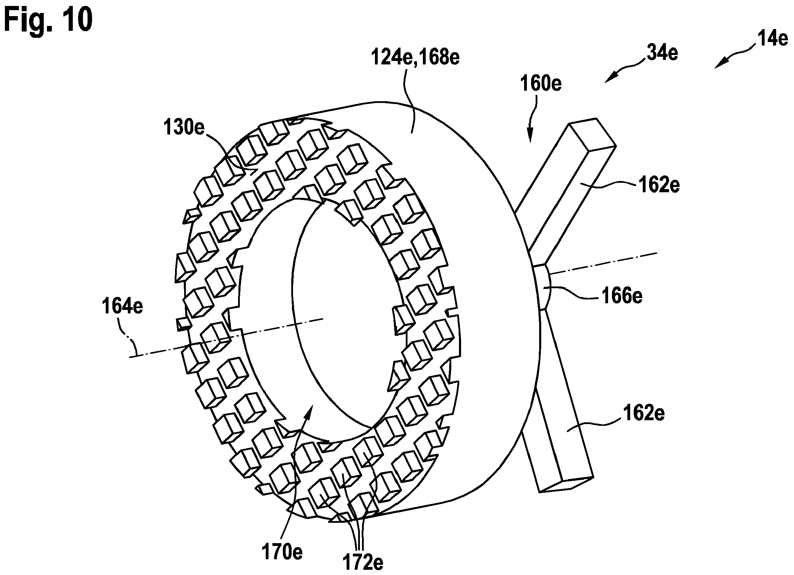

Figur 10 zeigt eine andere weitere alternative Ausgestaltung eines Stützelements 124e einer Medienübertragungseinheit 34e einer Medienspeichervorrichtung 14e. Das in der Figur 10 dargestellte Stützelement 124e weist eine zumindest im Wesentlichen analoge Ausgestaltung zu dem in der Beschreibung der Figur 9 beschriebenen Stützelement 124d auf, so dass bezüglich einer Ausgestaltung des in der Figur 10 dargestellten Stützelements 124e zumindest im Wesentlichen auf die Beschreibung der Figur 9 verwiesen werden kann. Im Unterschied zu dem in der Beschreibung der Figur 9 beschriebenen Stützelement 124d bildet das in der Figur 10 dargestellte Stützelement 124e vorzugsweise eine Aufnahmeausnehmung 170e aus, die zu einer zumindest teilweisen Aufnahme eines Medienübertragungselements 110e vorgesehen ist, welches insbesondere in Figur 10 nicht gezeigt ist. Bevorzugt ist die Aufnahmeausnehmung 170e dazu vorgesehen, das Medienübertragungselement 110e gegenüber einer quer, insbesondere zumindest im Wesentlichen senkrecht, zu einer Mittelachse 164e des Stützelements 124e durch eine Stützfläche 130e des Stützelements 124e ausgerichteten Bewegung des Medienübertragungselements 110e formschlüssig zu halten und/oder zu fixieren. Die Aufnahmeausnehmung 170e ist an einer die Stützfläche 130e aufweisenden Platte 168e des Stützelements 124e angeordnet. Insbesondere ist die Aufnahmeausnehmung 170e durch Innenflächen des Stützelements 124e begrenzt, welche insbesondere zumindest teilweise von der Stützfläche 130e begrenzt werden. Die Aufnahmeausnehmung 170e ist vorzugsweise zylinderförmig, quaderförmig und/oder kubisch ausgebildet und erstreckt sich um die Mittelachse 164e des Stützelements 124e. Vorzugsweise bildet das Stützelement 124e an der Stützfläche 130e Haltefortsätze 172e aus, die zu einer form- und/oder kraftschlüssigen Verbindung mit dem an der Stützfläche 130e anliegenden Medienübertragungselement 110e (in Figur 10 nicht gezeigt) vorgesehen sind. Es ist aber auch denkbar, dass die Stützfläche 130e strukturiert, insbesondere mit einer Bürststruktur, einer Wellenform o. dgl., oder ebenflächig ausgebildet ist.

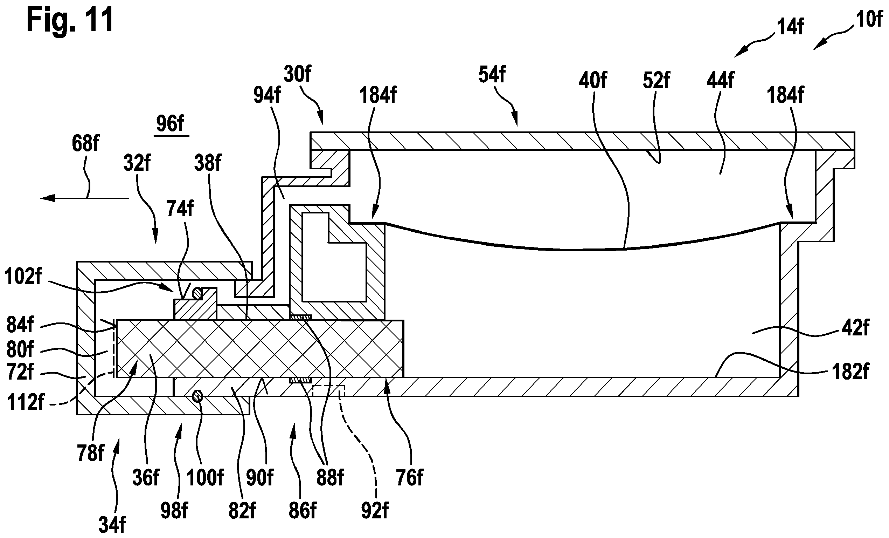

In Figur 11 ist eine weitere alternative Ausgestaltung einer Medienspeichervorrichtung 14f für ein Medienauftragungssystem 10f, insbesondere analog zur Figur 3, in einem Querschnitt gezeigt. Die Medienspeichervorrichtung 14f umfasst eine Medienspeichereinheit 30f zu einer Speicherung zumindest eines Mediums, eine, insbesondere mechanische, Schnittstelle 32f zu einer Verbindung mit einer Medienausgabeeinheit 12f des Medienauftragungssystems 10f (in Figur 11 nicht gezeigt) und eine Medienübertragungseinheit 34f zu einer Übertragung des Mediums von der Medienspeichereinheit 30f auf die Medienausgabeeinheit 12f in zumindest einem verbundenen Zustand der Schnittstelle 32f mit der Medienausgabeeinheit 12f. Die Medienübertragungseinheit 34f weist ein poröses Medienübertragungselement 36f auf, das an einem Ausgangskanal 38f der Medienspeichereinheit 30f angeordnet ist. Die Medienspeichereinheit 30f umfasst ein flexibles Medienbegrenzungselement 40f, das dazu vorgesehen ist, ein Speichervolumen 42f der Medienspeichereinheit 30f von einem Ausgleichsraum 44f der Medienspeichereinheit 30f abzugrenzen. Die in der Figur 11 dargestellte Medienspeichervorrichtung 14f weist eine zumindest im Wesentlichen analoge Ausgestaltung zu der in der Beschreibung der Figuren 1 bis 5 beschriebenen Medienspeichervorrichtung 14a auf, so dass bezüglich einer Ausgestaltung der in der Figur 11 dargestellten Medienspeichervorrichtung 14f zumindest im Wesentlichen auf die Beschreibung der Figuren 1 bis 5 verwiesen werden kann. Im Unterschied zu der in der Beschreibung der Figuren 1 bis 5 beschriebenen Medienspeichervorrichtung 14a ist das Medienbegrenzungselement 40f der Medienspeichereinheit 30f der in der Figur 11 dargestellten Medienspeichervorrichtung 14f vorzugsweise zumindest teilweise, insbesondere zumindest größtenteils, elastisch ausgebildet und dazu vorgesehen, insbesondere bei einer Entnahme von Medium aus dem Speichervolumen 42f, eine Rückstellkraft zu erzeugen, die einen Unterdruck in dem Speichervolumen 42f bewirkt. Das flexible Medienbegrenzungselement 40f begrenzt das Speichervolumen 42f zusammen mit mehreren Wandungen 182f der Medienspeichereinheit 30f, wobei das Medienbegrenzungselement 40f über eine Verbindungsstelle 184f derart an den Wandungen 182f befestigt ist, dass eine luftdichte Verbindung entsteht. Bevorzugt liegt das Medienbegrenzungselement 40f über die Verbindungsstelle 184f an den Wandungen 182f an. Das Medienbegrenzungselement 40f ist über die Verbindungsstelle 184f an den Wandungen 182f derart befestigt, dass es bei einer Entnahme von Medium aus dem Speichervolumen 42f in Richtung des Speichervolumens 42f elastisch verformt wird, wobei lediglich ein durch die Verbindungsstelle 184f umschlossener Teil des Medienbegrenzungselements 40f verformt wird. Insbesondere ist das Medienbegrenzungselement 40f zumindest teilweise, insbesondere ein Rand des Medienbegrenzungselements 40f, welcher an den Wandungen 182f anliegt, über die Verbindungsstelle 184f an den Wandungen 182f fixiert. Die Verbindungsstelle 184f erstreckt sich zumindest im Wesentlichen vollständig innerhalb einer Ebene. Die das Speichervolumen 42f begrenzenden Wandungen 182f sind insbesondere kastenförmig und/oder quaderförmig ausgebildet. Es ist aber auch denkbar, dass die das Speichervolumen 42f begrenzenden Wandungen 182f zylinderförmig und/oder zumindest teilweise rund angeordnet und/oder ausgebildet sind. Das flexible Medienbegrenzungselement 40f ist zumindest im Wesentlichen vollständig elastisch, insbesondere aus einem elastischen Material ausgebildet. Das Medienbegrenzungselement 40f ist zumindest im Wesentlichen vollständig aus einem elastischen Kunststoff ausgebildet. Es sind aber auch andere Ausgestaltungen des Medienbegrenzungselements 40f denkbar, wobei das Medienbegrenzungselement 40f beispielsweise lediglich teilweise aus einem elastischen Material ausgebildet ist. Insbesondere ist das Medienbegrenzungselement 40f dazu vorgesehen, bei einer Entnahme von Medium aus dem Speichervolumen 42f elastisch verformt zu werden, wobei insbesondere die Rückstellkraft bei einer elastischen Verformung erhöht wird. Das flexible Medienbegrenzungselement 40f ist dazu vorgesehen, in einem maximalen Füllzustand (in Figur 11 gezeigt) der Medienspeichereinheit 30f, insbesondere des Speichervolumens 42f, die Rückstellkraft zu erzeugen.

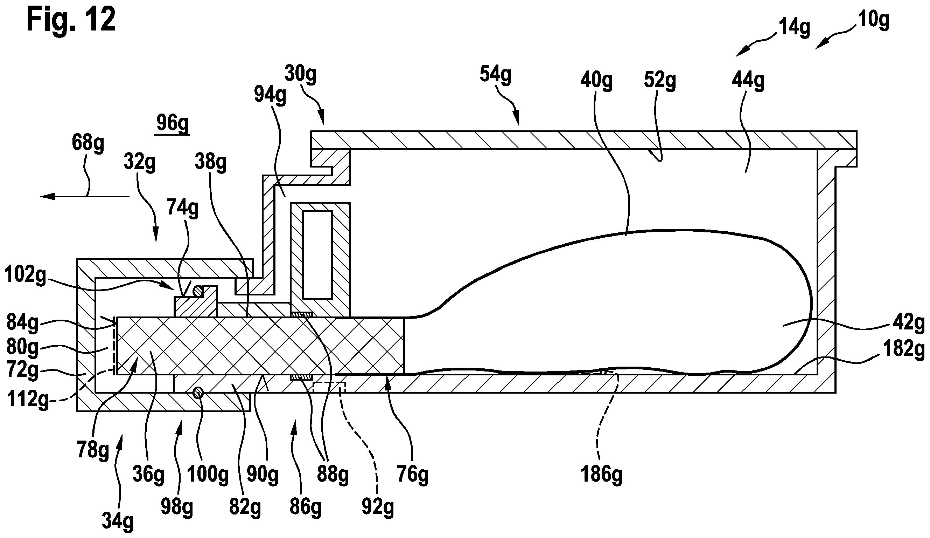

In Figur 12 ist eine andere weitere alternative Ausgestaltung einer Medienspeichervorrichtung 14g für ein Medienauftragungssystem 10g, insbesondere analog zu Figur 3 und zu Figur 11, in einem Querschnitt gezeigt. Die Medienspeichervorrichtung 14g umfasst eine Medienspeichereinheit 30g zu einer Speicherung zumindest eines Mediums, eine, insbesondere mechanische, Schnittstelle 32g zu einer Verbindung mit einer Medienausgabeeinheit 12g des Medienauftragungssystems 10g (in Figur 12 nicht gezeigt) und eine Medienübertragungseinheit 34g zu einer Übertragung des Mediums von der Medienspeichereinheit 30g auf die Medienausgabeeinheit 12g in zumindest einem verbundenen Zustand der Schnittstelle 32g mit der Medienausgabeeinheit 12g. Die Medienübertragungseinheit 34g weist ein poröses Medienübertragungselement 36g auf, das an einem Ausgangskanal 38g der Medienspeichereinheit 30g angeordnet ist. Die Medienspeichereinheit 30g umfasst ein flexibles Medienbegrenzungselement 40g, das dazu vorgesehen ist, ein Speichervolumen 42g der Medienspeichereinheit 30g von einem Ausgleichsraum 44g der Medienspeichereinheit 30g abzugrenzen. Die in der Figur 12 dargestellte Medienspeichervorrichtung 14g weist eine zumindest im Wesentlichen analoge Ausgestaltung zu der in der Beschreibung der Figuren 1 bis 5 beschriebenen Medienspeichervorrichtung 14a auf, so dass bezüglich einer Ausgestaltung der in der Figur 12 dargestellten Medienspeichervorrichtung 14g zumindest im Wesentlichen auf die Beschreibung der Figuren 1 bis 5 verwiesen werden kann. Im Unterschied zu der in der Beschreibung der Figuren 1 bis 5 beschriebenen Medienspeichervorrichtung 14a ist das Medienbegrenzungselement 40g der Medienspeichereinheit 30g der in der Figur 12 dargestellten Medienspeichervorrichtung 14g, insbesondere analog zu dem in der Figur 11 gezeigten Medienbegrenzungselement 40f, vorzugsweise zumindest größtenteils, elastisch ausgebildet und dazu vorgesehen, insbesondere bei einer Entnahme von Medium aus dem Speichervolumen 42g, eine Rückstellkraft zu erzeugen, die einen Unterdruck in dem Speichervolumen 42g bewirkt. Das Medienbegrenzungselement 40g begrenzt, insbesondere im Unterschied zu dem in der Figur 11 gezeigten Medienbegrenzungselement 40f, das Speichervolumen 42g zumindest im Wesentlichen vollständig und zumindest im Wesentlichen luftdicht. Es ist aber auch denkbar, dass das Medienbegrenzungselement 40g das Speichervolumen 42g lediglich größtenteils begrenzt. Das flexible Medienbegrenzungselement 40g ist zumindest im Wesentlichen vollständig elastisch, insbesondere aus einem elastischen Material ausgebildet. Das Medienbegrenzungselement 40g ist zumindest im Wesentlichen vollständig aus einem elastischen Kunststoff ausgebildet. Es sind aber auch andere Ausgestaltungen des Medienbegrenzungselements 40g denkbar, wobei das Medienbegrenzungselement 40g beispielsweise lediglich teilweise aus einem elastischen Material ausgebildet ist. Insbesondere ist das Medienbegrenzungselement 40g dazu vorgesehen, bei einer Entnahme von Medium aus dem Speichervolumen 42g elastisch verformt zu werden, wobei insbesondere die Rückstellkraft bei einer elastischen Verformung erhöht wird. Das Medienbegrenzungselement 42g ist zumindest im Wesentlichen ballonartig ausgebildet und in einem Bereich des Medienübertragungselements 36g an einer Wandung der Medienspeichereinheit 30g, insbesondere zumindest im Wesentlichen luftdicht, befestigt. Die Medienspeichereinheit 30g umfasst ein Haltemittel 186g, welches dazu vorgesehen ist, das Medienbegrenzungselement 40g an einer den Ausgleichsraum 44g begrenzenden Wandung 182g der Medienspeichereinheit 30g zu halten. Vorzugsweise ist das Haltemittel 186g als eine stoffschlüssige Verbindung zwischen dem Medienbegrenzungselement 40g und der Wandung 182g ausgebildet. Es sind aber auch andere Ausgestaltungen des Haltemittels 186g denkbar, beispielsweise als eine Klemmverbindung o. dgl. Das flexible Medienbegrenzungselement 40g ist dazu vorgesehen, in einem maximalen Füllzustand der Medienspeichereinheit 30g, insbesondere des Speichervolumens 42g, die Rückstellkraft zu erzeugen. Insbesondere weist das Medienübertragungselement 40g, insbesondere in einem unmontierten Zustand, eine unverformte Grundform auf, welche ein größeres Volumen umfasst wie das Speichervolumen 42g in dem maximalen Füllzustand der Medienspeichereinheit 30g, insbesondere des Speichervolumens 42g.

## Patentansprüche

1. Medienspeichervorrichtung für ein Medienauftragungssystem (10a; 10b; 10c; 10f; 10g), mit zumindest einer Medienspeichereinheit (30a; 30b; 30c; 30f; 30g) zu einer Speicherung zumindest eines Mediums, mit zumindest einer, insbesondere mechanischen, Schnittstelle (32a; 32b; 32c; 32f; 32g) zu einer Verbindung mit einer Medienausgabeeinheit (12a; 12b; 12c) des Medienauftragungssystems (10a; 10b; 10c; 10f; 10g) und mit zumindest einer Medienübertragungseinheit (34a; 34b; 34c; 34d; 34e; 34f; 34g) zu einer Übertragung des Mediums von der Medienspeichereinheit (30a; 30b; 30c; 30f) auf die Medienausgabeeinheit (12a; 12b; 12c) in zumindest einem verbundenen Zustand der Schnittstelle (32a; 32b; 32c; 32f; 32g) mit der Medienausgabeeinheit (12a; 12b; 12c), wobei die Medienübertragungseinheit (34a; 34b; 34c; 34d; 34e; 34f; 34g) zumindest ein, insbesondere poröses, Medienübertragungselement (36a; 110b; 110c; 110e; 36f; 36g) aufweist, das an einem Ausgangskanal (38a; 38b; 38c; 38d; 38f; 38g) der Medienspeichereinheit (30a; 30b; 30c; 30f; 30g) angeordnet ist, wobei die Medienspeichereinheit (30a; 30b; 30c; 30f; 30g) zumindest ein flexibles Medienbegrenzungselement (40a; 40f; 40g) umfasst, das dazu vorgesehen ist, zumindest ein Speichervolumen (42a; 42b; 42c; 42f; 42g) der Medienspeichereinheit (30a; 30b; 30c; 30f; 30g) von einem Ausgleichsraum (44a; 44f; 44g) der Medienspeichereinheit (30a; 30b; 30c; 30f; 30g) abzugrenzen, **dadurch gekennzeichnet, dass** die Schnittstelle (32a; 32b; 32c; 32f; 32g) dazu vorgesehen ist, das Medienübertragungselement (36a; 110b; 110c; 110e; 36f; 36g) in Abhängigkeit von einem Verbindungsparameter der Schnittstelle (32a; 32b; 32c; 32f; 32g) mit einem, insbesondere schwingungsangeregten, Medienausgabeelement (46a; 46b; 46c), insbesondere einer Membran, der Medienausgabeeinheit (12a; 12b; 12c) zu einer Übertragung des Mediums von der Medienspeichereinheit (30a; 30b; 30c; 30f; 30g) auf die Medienausgabeeinheit (12a; 12b; 12c) zu verbinden.

2. Medienspeichervorrichtung nach Anspruch 1, **dadurch gekennzeichnet, dass** das Medienübertragungselement (36a; 110b; 110c; 110e) dazu vorgesehen ist, über eine Medienentnahme aus dem Speichervolumen (42a; 42b; 42c) einen Unterdruck im Speichervolumen (42a; 42b; 42c) zu erzeugen und das entnommene Medium an das Medienausgabeelement (46a; 46b; 46c) zu leiten.

3. Medienspeichervorrichtung nach Anspruch 1 oder 2, **gekennzeichnet durch** zumindest eine Sensoreinheit (86a) zu einem Bestimmen einer Füllstandskenngröße der Medienspeichereinheit (30a; 30b; 30c) an der Medienübertragungseinheit (34a; 34b; 34c; 34d; 34e).

4. Medienspeichervorrichtung nach Anspruch 3, **dadurch gekennzeichnet, dass** die Sensoreinheit (86a) zumindest ein Sensorelement (88a) aufweist, das dazu vorgesehen ist, zum Bestimmen der Füllstandskenngröße zumindest eine Durchsatzkenngröße des Medienübertragungselements (36a; 110b; 110c; 110e) zu erfassen.

5. Medienspeichervorrichtung nach Anspruch 4, **dadurch gekennzeichnet, dass** die Durchsatzkenngröße als ein elektrischer Widerstand des Medienübertragungselements (36a; 110b; 110c; 110e) ausgebildet ist.

6. Medienspeichervorrichtung nach einem der vorhergehenden Ansprüche, **dadurch gekennzeichnet, dass** die Schnittstelle (32a; 32b; 32c; 32f; 32g) zumindest einen Fluidkanal (94a; 94f; 94g) umfasst, der fluidtechnisch getrennt von dem Speichervolumen (42a; 42b; 42c; 42f; 42g) ausgebildet ist und dazu vorgesehen ist, zu einem Befüllen des Speichervolumens (42a; 42b; 42c; 42f) einen Unterdruck an dem Ausgleichsraum (44a; 44f; 44g) bereitzustellen.

7. Medienspeichervorrichtung zumindest nach Anspruch 2, **dadurch gekennzeichnet, dass** die Medienübertragungseinheit (34a; 34b; 34c; 34d; 34e; 34f; 34g), insbesondere das Medienübertragungselement (36a; 110b; 110c; 110e; 36f; 36g), insbesondere zumindest im Wesentlichen zerstörungsfrei, wechselbar ausgebildet ist.

8. Medienspeichervorrichtung nach einem der vorhergehenden Ansprüche, **dadurch gekennzeichnet, dass** das Medienübertragungselement (36a; 110b; 110c; 110e) dazu vorgesehen ist, ein an das Medienausgabeelement (46a; 46b; 46c) zu übertragendes Medium zu filtern.

9. Medienspeichervorrichtung nach dem Oberbegriff des Anspruchs 1, insbesondere nach einem der vorhergehenden Ansprüche, **dadurch gekennzeichnet, dass** das flexible Medienbegrenzungselement (40f; 40g) zumindest teilweise, insbesondere zumindest größtenteils, elastisch ausgebildet ist und dazu vorgesehen ist, insbesondere bei einer Entnahme von Medium aus dem Speichervolumen (42f; 42g), eine Rückstellkraft zu erzeugen, die einen Unterdruck in dem Speichervolumen (42f; 42g) bewirkt.

10. Medienspeichervorrichtung nach Anspruch 9, **dadurch gekennzeichnet, dass** das flexible Medienbegrenzungselement (40f; 40g) dazu vorgesehen ist, in einem maximalen Füllzustand der Medienspeichereinheit (30f; 30g), insbesondere des Speichervolumens (42f; 42g), die Rückstellkraft zu erzeugen.

11. Medienspeichervorrichtung nach einem der vorhergehenden Ansprüche, insbesondere nach Anspruch 9 oder 10, **dadurch gekennzeichnet, dass** das flexible Medienbegrenzungselement (40f) das Speichervolumen (42f) zusammen mit zumindest einer Wandung (182f) der Medienspeichereinheit (30f) begrenzt, wobei das Medienbegrenzungselement (40f) über eine Verbindungsstelle (184f) derart an der Wandung (182f) befestigt ist, dass eine zumindest im Wesentlichen luftdichte Verbindung entsteht.

12. Medienspeichervorrichtung nach einem der vorhergehenden Ansprüche, insbesondere nach Anspruch 9 oder 10, **dadurch gekennzeichnet, dass** das flexible Medienbegrenzungselement (40g) das Speichervolumen (42g) zumindest größtenteils, insbesondere zumindest im Wesentlichen vollständig, zumindest im Wesentlichen luftdicht begrenzt.

13. Verfahren zu einem Befüllen einer Medienspeichervorrichtung (14a; 14b; 14c, 14d; 14e; 14f; 14g), insbesondere einer Medienspeichervorrichtung (14a; 14b; 14c, 14d; 14e; 14f; 14g) zumindest nach Anspruch 6, **dadurch gekennzeichnet, dass** in zumindest einem Verfahrensschritt (180a) mittels eines Fluidkanals (94a; 94f; 94g) einer Schnittstelle (32a; 32b; 32c; 32f; 32g) der Medienspeichervorrichtung (14a; 14b; 14c, 14d; 14e; 14f; 14g) ein Unterdruck an einem an einem zu befüllenden Medienbegrenzungselement (40a; 40f) der Medienspeichervorrichtung (14a; 14b; 14c, 14d; 14e; 14f; 14g) angeordneten Ausgleichsraum (44a; 44f; 44g) bereitgestellt wird, wobei über ein Medienübertragungselement (36a; 110b; 110c; 110e; 36f; 36g) der Medienübertragungseinheit (34a; 34b; 34c; 34d; 34e; 34f; 34g) zumindest ein Medium in das Medienbegrenzungselement (40a; 40f; 40g), insbesondere ein durch das Medienbegrenzungselement (40a; 40f; 40g) begrenztes Speichervolumen (42a; 42f; 42g), geleitet wird.

14. Medienauftragungssystem mit zumindest einer Medienspeichervorrichtung (14a; 14b; 14c, 14d; 14e; 14f; 14g), insbesondere einer Medienspeichervorrichtung (14a; 14b; 14c, 14d; 14e; 14f; 14g) nach einem der Ansprüche 1 bis 12, mit zumindest einer Medienausgabeeinheit (12a; 12b; 12c), die zumindest ein, insbesondere schwingungsangeregtes, Medienausgabeelement (46a; 46b; 46c), insbesondere eine Membran, zu einer Ausgabe eines Mediums aufweist, und mit zumindest einer Schnittstellenaufnahme (48a; 48b; 48c) zu einer Aufnahme einer Schnittstelle (32a; 32b; 32c; 32f; 32g) der Medienspeichervorrichtung (14a; 14b; 14c, 14d; 14e; 14f; 14g).
